# EUROPEAN PATENT SPECIFICATION

(11) **EP 3 994 575 B1**
(45) Date of publication and mention of the grant of the patent: **04.11.2026**
(21) Application number: 20731729.8
(22) Date of filing: 21.05.2020
(51) Int. Cl.: G06F 9/50

(54) **DISTRIBUTED SYSTEM THAT PROMOTES TASK-MACHINE AFFINITY**
VERTEILTES SYSTEM ZUR FÖRDERUNG VON AUFGABE-MASCHINE-AFFINITÄT
SYSTÈME DISTRIBUÉ QUI FAVORISE UNE AFFINITÉ MACHINE-TÂCHE

(30) Priority: 02.07.2019 US 201916460119
(43) Date of publication of application: 11.05.2022
(73) Proprietor: Microsoft Technology Licensing, LLC, Redmond, WA 98052-6399 (US)
(72) Inventor: ZHU, Jia, Redmond, Washington 98052-6399 (US); POWERS, Simon Julian, Redmond, Washington 98052-6399 (US); CODATO, Paolo, Redmond, Washington 98052-6399 (US); ZOU, Yi, Redmond, Washington 98052-6399 (US); AHMED, Junaid, Redmond, Washington 98052-6399 (US)
(74) Representative: CMS Cameron McKenna Nabarro Olswang LLP
(86) International application number: PCT/US2020/033894
(87) International publication number: WO 2021/002970

(56) References cited:
- US-A1- 2009 100 441
- US-A1- 2018 052 765
- HUNT ET AL.: "ZooKeeper: Wait-free Coordination for Internet-scale Systems", PROCEEDINGS OF THE 2010 USENIX ANNUAL TECHNICAL CONFERENCE, 2010, pages 14, XP002799728

## Description

### BACKGROUND

Distributed systems employ plural computing devices to process data. These systems can use different strategies for assigning tasks to the computing devices. In a traditional master-slave model, a distributed system uses one or more dedicated master computing devices to assign tasks to slave computing devices. In a decentralized approach, a distributed system performs task assignment without the use of dedicated master computing devices. For instance, a distributed system can use a combination of consistent hashing and the gossip protocol to assign tasks to machines. These strategies, however, suffer from various inefficiencies.
US2018052765A1 describes system, method, and computer program product embodiments for adaptively self-tuning a bucket memory manager. An embodiment operates by receiving requests for memory blocks of varying memory sizes from a client. Determining a workload for the client based on the requests. Analyzing buckets in the bucket memory manager based on the workload. Adjusting parameters associated with the bucket memory manager based on the analyzing to accommodate the requests.
HUNT ET AL: "ZooKeeper: Wait-free Coordination for Internet-scale Systems", PROCEEDINGS OF THE 2010 USENIX ANNUAL TECHNICAL CONFERENCE, 2010 describes ZooKeeper, which is a service for coordinating processes of distributed applications. Since ZooKeeper is part of critical infrastructure, ZooKeeper aims to provide a simple and high performance kernel for building more complex coordination primitives at the client. It incorporates elements from group messaging, shared registers, and distributed lock services in a replicated, centralized service. The interface exposed by Zoo-Keeper has the wait-free aspects of shared registers with an event-driven mechanism similar to cache invalidations of distributed file systems to provide a simple, yet powerful coordination service.

### SUMMARY

A technique is described herein for allocating tasks within a distributed system. The distributed system includes plural computing devices. Each computing device, in turn, provides a bucket manager and at least one application instance. The bucket managers allocate work to the computing devices in units of buckets, in a manner governed by a set of application-specific initialization parameters. The bucket managers also perform their assignment function in cooperation with a separate storage and notification (S&N) system. The S&N system stores data nodes in a hierarchical data structure that reflect the assignment-related state of the distributed system. The S&N system also notifies the bucket managers upon changes in the data nodes.

More specifically, a bucket manager can operate in a leader role and a follower role. When operating in a leader mode, the bucket manager performs operations of: interacting with the S&N system to determine whether a change in membership has occurred in the distributed system; ensuring that any detected change is stable; upon confirmation of a stable change, updating an assignment of buckets to computing devices in the distributed system such that no two computing devices are assigned a same bucket; and interacting with the S&N system to record the assignment of buckets. Each bucket corresponds to an allotment of work to be performed by a computing device to which it is assigned.

When operating in the follower role, the bucket manager of a computing device performs operations of: interacting with the S&N system to determine whether there is a change of buckets assigned to the computing device; notifying the application instance provided by the computing device of any detected change in buckets; and interacting with the S&N system to claim ownership of any bucket to which it has been newly assigned, and/or to relinquish ownership of any bucket that has been newly removed. When an application instance receives notification that a new bucket has been assigned to it, it loads all the resources that are required to perform tasks associated with that bucket. When the application instance receives notification that an existing bucket has been removed, it removes those resources.

In one implementation, a work-routing component routes a task to a particular bucket by hashing data associated with the task, and then mapping that hash to a particular bucket ID. The work-routing component then sends a task request to the computing device that owns the bucket associated with the particular bucket ID. More generally, each bucket processes all tasks having hashes that map to the bucket.

According to one technical advantage, the bucket manager corresponds to a general-purpose resource that different applications can configure to allocate buckets to computing devices, via respective sets of initialization parameters. The use of a general-purpose bucket manager reduces the burden on an application developer, who otherwise is required to incorporate custom assignment logic into an application.

According to another technical advantage, the bucket manager can use time-out periods and other provisions to ensure that computing devices are stable before assigning work to the computing devices. This behavior promotes the affinity or "stickiness" of tasks to machines. This provision is useful because it reduces the amount of work (and time associated therewith) that is required to load resources that an application instance needs to perform a task (for a newly-joining computing device), and to remove these resources (for a newly-departing computing device).

According to another technical advantage, the bucket manager can perform its assignment function without interaction among computing devices in the distributed system. The distributed system achieves this goal by using the S&N system to coordinate its assignment operations, in lieu of device-to-device interaction. This provision reduces the chance that any computing device will become overloaded on account of work performed by its bucket manager.

The above-summarized technique can be manifested in various types of systems, devices, components, methods, computer-readable storage media, data structures, graphical user interface presentations, articles of manufacture, and so on.

This Summary is provided to introduce a selection of concepts in a simplified form; these concepts are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

Fig. 1 shows an illustrative organization of logic components provided by a distributed system.
Fig. 2 shows an illustrative hierarchical organization of data nodes provided by a storage and notification (S&N) system. The S&N system, in turn, corresponds to one of the logic components of Fig. 1.
Fig. 3 shows a technique for assigning a leader computing device. This technique leverages the information provided by the S&N system of Fig. 2.
Fig. 4 shows one illustrative distributed system that utilizes the logic components of Fig. 1.
Figs. 5-7 show three illustrative work-routing components for routing tasks to buckets in the distributed system of Fig. 4.
Fig. 8 shows a system that implements an upload service using the logic components of Fig. 1.
Fig. 9 shows operations performed by a bucket manager when a computing device starts up.
Figs. 10-12 show operations performed by a bucket manager when acting in a leader role.
Figs. 13 and 14 show operations performed by a bucket manager when acting in a follower role.
Figs. 15 and 16 show operations performed by an application instance upon receiving notification of a new bucket (with respect to Fig. 15) and upon receiving notification of the removal of an existing bucket (with respect to Fig. 16).
Figs. 17 and 18 provide a summary of the operations performed by the bucket manager in its leader and follower roles.
Fig. 19 shows an illustrative type of computing device that can be used to implement any aspect of the features shown in the foregoing drawings.

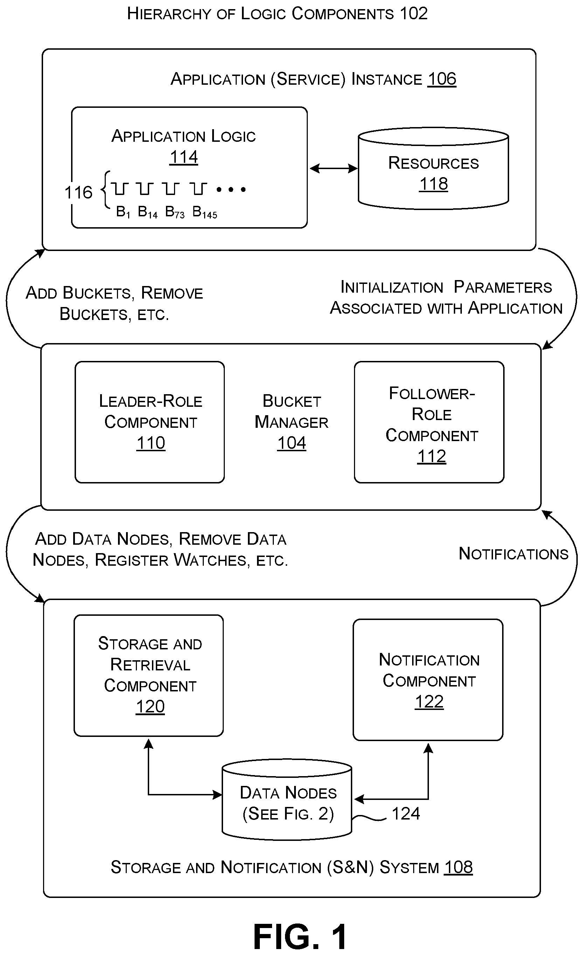

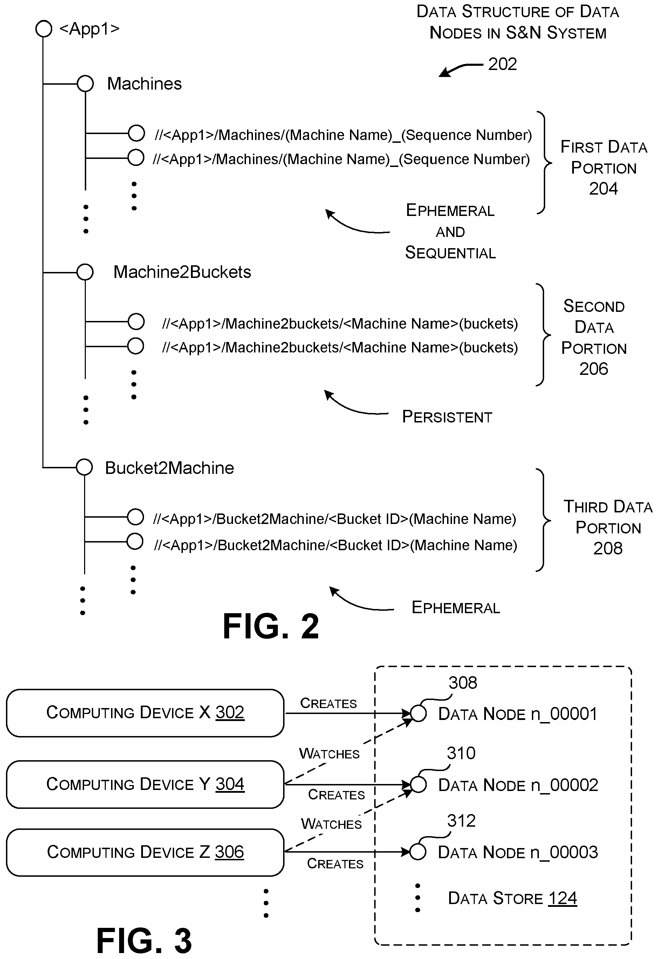

The same numbers are used throughout the disclosure and figures to reference like components and features. Series 100 numbers refer to features originally found in Fig. 1, series 200 numbers refer to features originally found in Fig. 2, series 300 numbers refer to features originally found in Fig. 3, and so on.

### DETAILED DESCRIPTION

This disclosure is organized as follows. Section A describes a distributed system that uses bucket managers to assign work to computing devices. Section B sets forth illustrative methods that explain the operation of the distributed system of Section A. And Section C describes an illustrative computing device that can be used to implement any aspect of the features described in Sections A and B.

As a preliminary matter, the term "hardware logic circuitry" encompasses one or more hardware processors (e.g., CPUs, GPUs, etc.) that execute machine-readable instructions stored in a memory, and/or one or more other hardware logic units (e.g., FPGAs) that perform operations using a task-specific collection of fixed and/or programmable logic gates. Section C provides additional information regarding one implementation of the hardware logic circuitry. In some contexts, each of the terms "component," "tool," and "engine" refers to a part of the hardware logic circuitry that performs a particular function.

In one case, the illustrated separation of various parts in the figures into distinct units may reflect the use of corresponding distinct physical and tangible parts in an actual implementation. Alternatively, or in addition, any single part illustrated in the figures may be implemented by plural actual physical parts. Alternatively, or in addition, the depiction of any two or more separate parts in the figures may reflect different functions performed by a single actual physical part.

Other figures describe the concepts in flowchart form. In this form, certain operations are described as constituting distinct blocks performed in a certain order. Such implementations are illustrative and non-limiting. Certain blocks described herein can be grouped together and performed in a single operation, certain blocks can be broken apart into plural component blocks, and certain blocks can be performed in an order that differs from that which is illustrated herein (including a parallel manner of performing the blocks). In one implementation, the blocks shown in the flowcharts that pertain to processing-related functions can be implemented by the hardware logic circuitry described in Section C, which, in turn, can be implemented by one or more hardware processors and/or other logic units that include a task-specific collection of logic gates.

As to terminology, the phrase "configured to" encompasses various physical and tangible mechanisms for performing an identified operation. The mechanisms can be configured to perform an operation using the hardware logic circuity of Section C. The term "logic" likewise encompasses various physical and tangible mechanisms for performing a task. For instance, each processing-related operation illustrated in the flowcharts corresponds to a logic component for performing that operation. A logic component can perform its operation using the hardware logic circuitry of Section C. When implemented by computing equipment, a logic component represents an electrical element that is a physical part of the computing system, in whatever manner implemented.

Any of the storage resources described herein, or any combination of the storage resources, may be regarded as a computer-readable medium. In many cases, a computer-readable medium represents some form of physical and tangible entity. The term computer-readable medium also encompasses propagated signals, e.g., transmitted or received via a physical conduit and/or air or other wireless medium, etc. However, the specific term "computer-readable storage medium" expressly excludes propagated signals per se, while including all other forms of computer-readable media.

The following explanation may identify one or more features as "optional." This type of statement is not to be interpreted as an exhaustive indication of features that may be considered optional; that is, other features can be considered as optional, although not explicitly identified in the text. Further, any description of a single entity is not intended to preclude the use of plural such entities; similarly, a description of plural entities is not intended to preclude the use of a single entity. Further, while the description may explain certain features as alternative ways of carrying out identified functions or implementing identified mechanisms, the features can also be combined together in any combination. Finally, the terms "exemplary" or "illustrative" refer to one implementation among potentially many implementations.

### A. Illustrative Distributed System

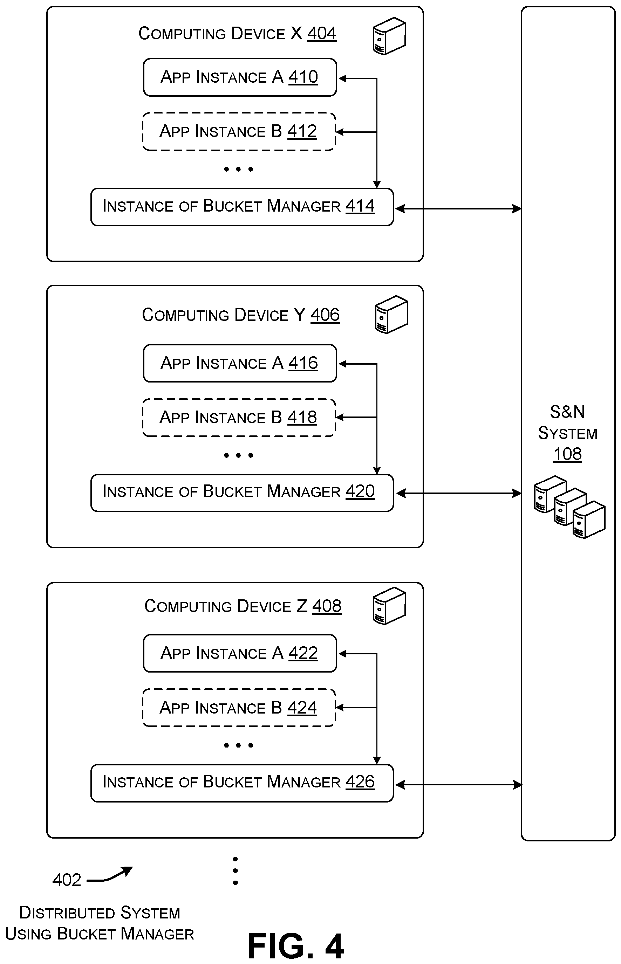

Fig. 1 shows a hierarchy of logic components 102 (e.g., a software stack) that includes a bucket manager 104, an application 106, and an S&N system 108. As will be described more fully in connection with Fig. 4, each computing device of a distributed system implements an instance of the bucket manager 104 and an instance of the application 106. One or more separate computing devices may implement the S&N system 108.

The bucket manager 104 allocates buckets to computing devices in the distributed system. A bucket demarcates a set of tasks to be handled by a computing device to which the bucket is assigned. For example, a bucket may correspond to a segment of a hash space. A computing device that includes a particular bucket will handle all tasks having hashes that map to the bucket's associated portion of the hash space.

The application 106 uses the allocated buckets in the following manner. A work-routing component (not shown in Fig. 1) first hashes data associated with a task, to produce a hash. The work-routing component then maps the hash to a bucket ID. The bucket ID, in turn, corresponds to a particular bucket. The work-routing component routes a task request to the computing device that currently owns the particular bucket. The computing device then uses its local instantiation of the application 106 to processes the task.

More specifically, consider the merely illustrative case in which the task involves processing data associated with a website. The work-routing component can generate a hash of the Uniform Resource Locator (URL) of the website, and then extract the n most significant bits of the hash to produce a bucket ID, e.g., by right-shifting the hash a prescribed number of positions. This bucket ID, in turn, identifies a particular bucket. The work-routing component then routes a task request associated with the website to the computing device that currently owns the identified bucket.

The bucket manager 104 can operate in a leader role at times. In this role, the bucket manager 104 uses a leader-role component 110 to manage assignment and removal of buckets among the computing devices in the distributed system. At any given time, the distributed system assigns only one bucket manager to operate in the leader role.

Each bucket manager also operates in a follower mode. In this role, the bucket manager 104 uses a follower-role component 112 to receive and act on assignment instructions produced by the leader. More specifically, each bucket manager operates in a follower role, even during those times in which a bucket manager is also serving as a leader.

The application 106 can perform any function or combination of functions using application logic 114. For instance, in the above-mentioned example, the application logic 114 performs the process of converting website data into a form that can be uploaded to a distributed index system. The application logic 114 performs these operations with respect to a set of one or more buckets 116 assigned to it at any given time. In some examples, the application logic 114 also performs its operations using resources provided in a data store 118. The resources may include data, program code, etc. For example, assume that the application logic 114 performs some function that relies on map information associated with a user's current location; in that case, the resources may correspond to relatively large map files.

Upon being instructed by the bucket manager 104 to take ownership of a new bucket, the application logic 114 must perform the potentially time-consuming task of loading appropriate application resources into the data store 118. Upon being instructed by the bucket manager 104 to remove a bucket, the application logic 114 must perform the potentially time-consuming task of purging the application resources from the data store 118. These events are more generally referred to herein as context changes.

The S&N system 108 includes a storage and retrieval component 120 and a notification component 122. The storage and retrieval component 120 stores and removes data nodes in a data store 124 upon instruction from the bucket manager 104. As will be described in greater detail below, the data nodes generally describe the assignment-related state of the distributed system. The notification component 122 notifies the bucket manager 104 of any changes that have occurred to the data nodes in the data store 124. The notification component 122 performs this task in response to receiving watch requests (callback requests) from the bucket manager 104. In one non-limiting implementation, the S&N system 108 can implement aspects of the storage and retrieval component 120 and the notification component 122 using the Zookeeper architecture described in Hunt, et al., "ZooKeeper: Wait-free Coordination for Internet-scale Systems," Proceedings of the 2010 USENIX Annual Technical Conference, 2010, 14 pages. Note, however, that the Zookeeper architecture specifies a general-purpose framework for storing data in response to direct interaction with an application (which defines what data is stored), whereas the architecture of Fig. 1 shows that the application 106 interacts with the S&N system 108 via the intermediary of the bucket manager 104. Further note that the Zookeeper architecture simply stores data without insight as to what the data represents; it is the application that attaches meaning to the data. In other implementations, the bucket manager 104 can work in conjunction with other S&N systems besides those that adopt the Zookeeper architecture.

In one implementation, the bucket manager 104 interacts with the S&N system 108 through a set of application programming interfaces (APIs) provided by the S&N system 108. The application 106 interacts with the bucket manager 104 through a set of APIs offered by the bucket manager 104.

According to one technical advantage, the hierarchy of logic components 102 uses a general-purpose bucket manager 104 to manage the assignment of buckets to the application 106, rather than relying on each application developer to create custom logic that performs this function on the application level. This design therefore simplifies the design of the application. An application developer need only provide an interface that allows the application 106 to interact with the bucket manager 104, e.g., through the APIs offered by the bucket manager 104.

In practice, the application developer also produces a set of initialization parameters that will govern the operation of the bucket manager 104. The application 106 can forward the set of initialization parameters to the bucket manager 104 when the bucket manager 104 is initialized. As used herein, the term "parameter" refers to a pair composed of a parameter variable (such as time-out period) and a parameter value (such as 1 second).

Without limitation, one such parameter specifies a time-out period that controls when the bucket manager 104 can consider a newly-introduced computing device as ready to accept buckets. Another parameter specifies a time-out period that controls when the bucket manager 104 can consider a recently-removed computing device as truly having left the distributed system. Another parameter specifies the optimum number of buckets that each computing device prefers to own. Another parameter specifies a maximum number of buckets that each computing device will accept. Another parameter specifies a minimum number of buckets that each computing device will accept. Another parameter specifies whether a subset of computing devices may operate as standby computing devices, accepting no buckets until a prescribed failure condition is encountered. One or more other parameters may specify amounts of time that the distributed system is allowed to exceed one or more other threshold values (e.g., by exceeding the optimum number of buckets). Another parameter specifies a number of hash buckets to be used (e.g., 256 buckets, 512 buckets, etc.). Another parameter specifies a number of computing devices that the application plans to use, and so on. These parameters are described by way of example, not limitation; other implementations can use yet other parameters not mentioned above, and/or can omit one or more of the parameters mentioned above.

Also note that the application 106 does not directly interact with the S&N system 108. Rather, the application 106 directly interacts with the bucket manager 104, which, in turn, interacts with the S&N system 108. This provision also simplifies the application developer's task of creating an application, e.g., because the application developer need not build a custom interface for interacting with the S&N system 108.

According to another technical advantage, the computing devices that compose the distributed system need not communicate with each other in the course of managing buckets. Rather, the computing devices indirectly coordinate their behavior via the intermediary of the S&N system 108. This provision reduces the load placed any computing device, particularly in the case in which the computing device has a bucket manager that is operating as a leader.

According to another technical advantage, the bucket manager 104 can be configured to reduce the number of context changes caused by adding and removing buckets. As will be explained more fully below, the bucket manager 104 performs this task, in part, by applying one or more time-outs periods to ensure that a newly-added computing device is stable before assigning buckets to it, and/or to ensure that a newly-departed device has truly left before removing its buckets. Stated in another way, these provisions discourage unnecessary or inefficient changes in context, and have the effect of promoting affinity or "stickiness" between tasks performed by computing devices and the computing devices themselves. This is particularly beneficial in those cases in which the application 106 takes an appreciable amount of time to load and/or remove resources from the data store 118. At the same time, the bucket manager 104 remains responsive enough to changes in the distributed system to prevent a computing device that has truly left the distributed system from asserting ownership over buckets, which might negatively affect performance.

The architecture shown in Fig. 1 is superior to a master-slave framework for allocating tasks because a master-slave framework requires the use of a dedicated master computing device. The master-slave framework may offer substandard performance when the master computing device fails or becomes overloaded. The architecture shown in Fig. 1 has advantages over other distributed allocation algorithms because, as set forth above, it promotes affinity between tasks and computing devices, and therefore reduces the number of expensive context changes. It also offers a general-purpose bucket manager that can be "plugged" into different applications without significant application design effort.

Fig. 2 shows one data structure 202 for storing data nodes in the data store 124 of Fig. 1. From a high-level perspective, the data structure 202 stores information in a hierarchical organization of nodes. In other words, the data structure 202 stores information in a tree-like file system. The bucket manager 104 can identify a data node in the tree by specifying a path from the root node of the data tree to the data node under consideration. The root node of the data tree identifies a particular application (here, "App1"). In some environments, the data store 124 can store plural data structures associated with plural respective applications, having plural respective root nodes (e.g., "App1," "App2," "App3," etc.). This allows a bucket manager 104 to simultaneously manage allocation of buckets for two or more applications running on the same computing devices.

A first data portion 204 of the data structure 202 pertains to a "Machines" data branch. Data nodes that emanate from this branch identify computing devices included in the distributed system at any given time. More specifically, each computing device creates a data node in the first data portion 204 when it joins the distributed system. The storage and retrieval component 120 also automatically removes any data node in the first data portion 204 when its associated computing device shuts down, fails, or otherwise stops servicing a particular application session under consideration. In this sense, the data nodes in the first data portion 204 may be considered as ephemeral or non-persistent.

Further, when creating this type of node, the storage and retrieval component 120 appends data that identifies the temporal position of the node relative to other nodes in the first data portion 204. The bucket manager 104 can leverage the sequence information associated with the data nodes in the first data portion 204 to identify the temporal order in which computing devices joined the distributed system. The bucket manager 104 can use this insight, in turn, to determine whether it should assume the role of leader at any given time. (Additional information regarding this behavior will be set forth below in the description of Fig. 3.)

A second data portion 206 of the data structure 202 is associated with a "Machine2Buckets" data path, which provides information regarding buckets assigned to a particular computing device, given a specified computing device. In other words, the "Machine2Buckets" data path maps a specified machine to its associated buckets. The leader computing device creates and modifies the data nodes in the second data portion 206. A follower computing device can consult the second data portion 206 to determine what buckets have been assigned to it. That is, if the follower computing device corresponds to a computing device X, this device consults a data node in the second data portion 206 associated with device X to find out what buckets have been assigned to it. The storage and retrieval component 120 retains the information in the second data portion 202 for a computing device when that computing device shuts down, fails, or otherwise stops servicing an application session under consideration. In this sense, the data nodes in the second data portion 206 may be considered non-ephemeral or persistent. Also unlike the first data portion 204, the data nodes the second data portion 206 do not capture the order in which the data nodes were created.

A third data portion 208 of the data structure 202 stores data nodes under a "Bucket2Machine" data path, which provides information regarding what computing device is currently asserting ownership of a bucket, given a specified bucket. In other words, the "Bucket2Machine" data maps a specified bucket to the machine that currently owns the bucket. Each computing device that claims ownership of bucket can create a data node in the third data portion 208 to memorialize this event. Each computing device that relinquishes control of a bucket can remove a corresponding data node in the third data portion 208. Prior to claiming ownership of a bucket, a computing device can also consult the third data portion 208 to determine whether the bucket is currently owned by another computing device. Like the first data portion 204, the data nodes in the third data portion 208 may be considered ephemeral or non-persistent. Unlike the first data portion 204, the data nodes in the third data portion 208 do not capture the temporal order in which the data nodes were created.

Fig. 3 provides an example of how the bucket managers associated with three computing devices (302, 304, 306) can leverage the data nodes in the data store 124 to determine what bucket manger should operate as a leader. These data nodes specifically correspond to ephemeral-sequential data nodes provided by the first data portion 204.

In operation, the bucket manager of the first computing device X 302 creates a first sequential data node 308 upon its initialization. The bucket manager of the second computing device Y 304 creates a second sequential data node 310 upon its initialization. The bucket manager of the third computing device Z 306 creates a third sequential data node 312 upon its initialization. The three data nodes (308, 310, 312) include information that identifies their relative order. Further, each bucket manager registers to watch whatever data node immediately precedes its own data node. For instance, the third computing device Z 306 registers to receive a notification when any change occurs to the data node 310 associated with the second computing device Y 304. Upon discovering that the data node 310 is removed (e.g., because the second computing device Y 304 has failed or otherwise shuts down), the bucket manager of the third computing device Z 306 will register to watch the immediately-preceding data node - in this case, the data node 308. Finally, a bucket manager that discovers that it has no preceding data node will assume the role of leader. For instance, the bucket manager of the first computing device X 302 determines that it has the earliest-created data node 308, and therefore it should serve the role of leader.

Fig. 4 shows one illustrative distributed system 402 that utilizes the logic components of Fig. 1. More specifically, the distributed system 402 includes three representative computing devices (404, 406, 408), although some environments can include dozens, hundreds, thousands, etc. of computing devices. Each computing device can correspond to a server or any other kind of computing device. Section C describes representative hardware that each computing device may include. Each computing device also interacts with the S&N system 108. The S&N system 108 itself can be implemented using one or more computing devices (e.g., servers). In the case in which the S&N system 108 uses plural computing devices, it can include a mechanism for replicating the information in the data store 124 across the plural computing devices. The computing devices (404, 406, 408) may interact with the S&N system 108 via point-to-point links, a local area network, a wide area network, etc., or any combination thereof.

Each computing device includes one or more application instances and a bucket manager. For example, the computing device X 404 includes an application instance A 410 and an application instance B 412, communicatively coupled to a bucket manager 414. Each application instance performs environment-specific application operations. Further, each application instance loads a set of initialization parameters to the bucket manager 414. Similarly, the computing device Y 406 includes an application instance A 416, an application instance B 418, and a bucket manager 420. The computing device Z 408 includes an application instance A 422, an application instance B 424, and a bucket manager 426. The bucket managers (414, 420, 426) operate in different independent assignment spaces when interacting with different respective applications. To facilitate explanation, however, the remaining description will assume that the bucket managers (414, 420, 426) only work in cooperation with a single application, such as an App A.

At any given time, only one bucket manger is operating as a leader; the other bucket managers operate as followers. Further, at any given time, each application instance may perform its task with respect to a set of buckets. The set of buckets is disjoint across computing devices (with respect to the same application). This means that no two computing devices will be assigned the same bucket at any given time (with respect to the same application). This avoids errors that might occur when two or more computing devices perform duplicative work with respect to the same tasks.

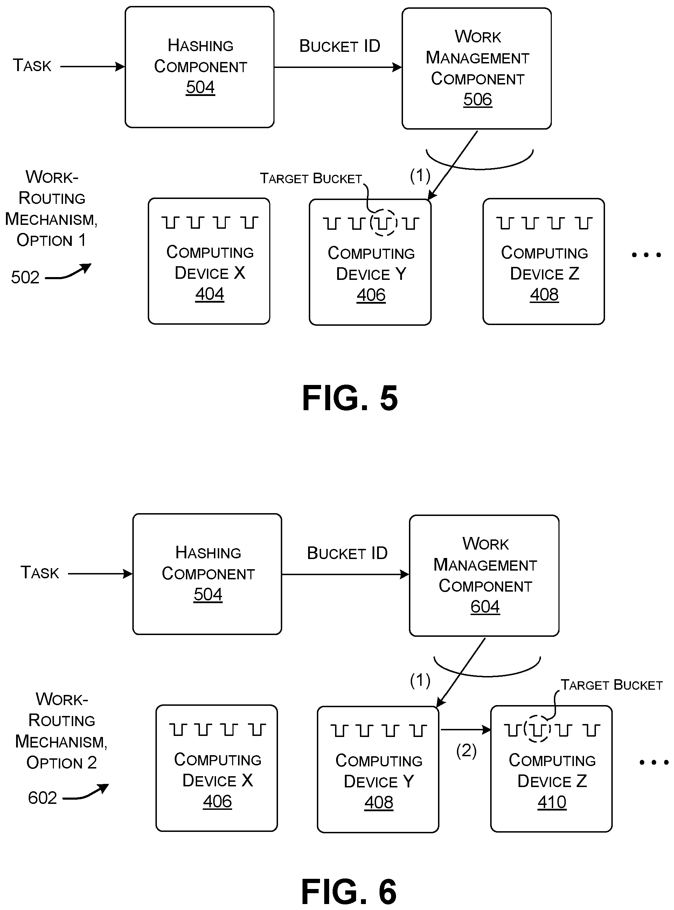

Figs. 5-7 show three illustrative work-routing components (502, 602, 702) for routing tasks to buckets in the distributed system of Fig. 4. Starting with Fig. 5, a hashing component 504 generates a hash of data associated with a task (such as, without limitation, a 128-bit hash value). For example, again consider the case in which an application performs processing on data associated with a website. The hashing component 504 can generate a hash of a URL associated with the website and/or the page content associated with the website, etc. The hashing component 504 can use any hash algorithm to perform this task, so long as the hash algorithm uniformly distributes hashes across a hash space. Illustrative hash algorithms that can be used include the MD5 algorithm (e.g., described in RFC 1321, 1992), a SHA-family algorithm (e.g., described in RFC 3174, 2001), etc. To provide merely one non-limiting example, the hashing component 504 can apply various environment-specific rules to normalize a URL, append random information to it (by "salting" it), and then process the resultant information using the MD5 algorithm to produce a hash. The hashing component 504 can then extract the n most significant bits of the hash to generate a bucket ID associated with the task under consideration. The bucket ID identifies a particular segment of a hash space. It also identifies a particular bucket.

A work management component 506 uses the bucket ID to forward a task request to the computing device to which the particular bucket is currently assigned. For example, assume that the second computing device Y 406 currently owns the particular bucket associated with the bucket ID. The work management component 506 can forward a task request to the computing device Y 406. The application instance running on the second computing device Y 406 then obtains whatever data is necessary to perform the task, and then performs the task itself. The above behavior assumes that the work management component 506 has access to information provided by the data store 124 that specifies the association between computing devices and buckets.

In the example of Fig. 6, assume that a work management component 604 does not initially know what computing device owns the particular bucket. The work management component 604 can handle this scenario by first forwarding the task request to any randomly-chosen computing device, such as the second computing device Y 406. The work management component 604 can then rely on the second computing device Y 406 to forward the task request to the computing device that actually owns the particular bucket (assuming that the second computing device Y 406 does not currently own the particular bucket). In this case, the second computing device Y 406 forwards the request to the third computing device Z 408. This behavior assumes that the second computing device Y 406 can use the information provided in the data store 124 to determine the computing device that owns the particular bucket.

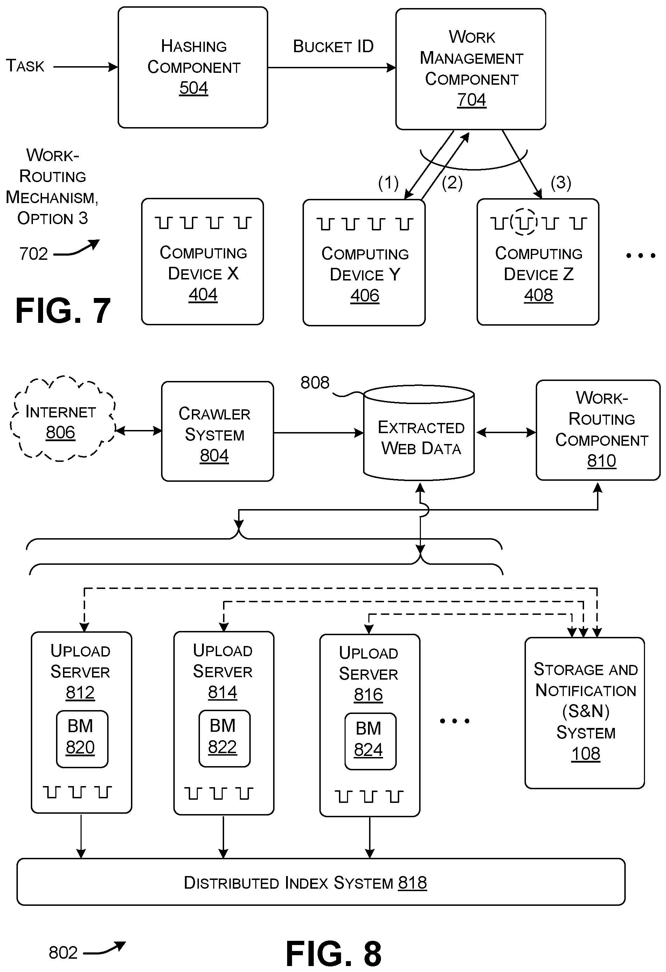

In the example of Fig. 7, again assume that a work management component 704 does not initially know what computing device owns the particular bucket. And again assume that the work management component 704 first forwards a task request to the second computing device Y 406. In this case, the second computing device Y 406 identifies the computing device that owns the sought-after bucket, and returns this information to the work management component 704. The work management component 704 uses this information to send the task request to the appropriate computing device, here corresponding to the third computing device Z 408.

In the above examples, there is a chance that a target bucket is reassigned while a task request is being sent to a target computing device that currently owns the bucket. The target computing device can address this scenario by automatically forwarding the task request to the correct computing device. Or the target computing device can mark the task request as failed, upon which the work management component can repeat the above-described routing procedures.

The above three examples of work-routing components are described in the spirit of illustration, not limitation. Other implementations can use yet other strategies to forward tasks to appropriate computing devices.

Fig. 8 shows a distributed system 802 that implements an upload service using the logic components of Fig. 1. In this environment, a crawler system 804 crawls the Internet 806 to discover new websites, or websites that have been newly modified (compared to an immediately-preceding crawling operation). The crawler system 804 stores a data entry regarding each such-identified website in a data store 808. A work-routing component 810 then sends one or more task requests to a distributed system that includes plural upload servers (812, 814, 816). In one case, each such task request instructs an upload server to process website data associated with a single URL that maps to bucket owned by the upload server. In another case, each task request instructs an upload server to process a batch of websites having respective URLs that map to a bucket owned by the upload server. Upon receiving such a request, an uploader server pulls the appropriate data from the data store 808 and processes it. More specifically, each upload server converts the data associated with a website into a reverse index format that can be consumed by a distributed index system 818. The upload server then transfers the processed data to the distributed index server 818. A search engine (not shown) uses the distributed index system 818 to map query terms submitted by users to websites that contain those query terms.

The upload servers (812, 814, 816) include respective bucket managers (BMs) (820, 822, 824) that collectively allocate buckets to upload servers (812, 814, 816). To perform this task, each bucket manager interacts with the S&N system 108. As noted above, at any given time, only one bucket manager operates as a leader. Further, at any given time, no two uploader servers owns the same bucket.

Bucket allocation is "expensive" in the upload service because it requires appreciable time and resources to perform, and thus negatively affects system throughput. For instance, upon being assigned a new bucket, the upload service needs to parse different files to determine the status of the upload process with respect to the work associated with the bucket. The upload service also needs to identify and remove temporary files left behind by the previous owner of the bucket, and so on. The technique described herein helps reduce these expensive bucket reassignments.

The example of Fig. 8 is presented in the spirit of illustration, not limitation. Other implementations can use the architecture shown in Fig. 4 to perform any other application tasks.

### B. Illustrative Processes

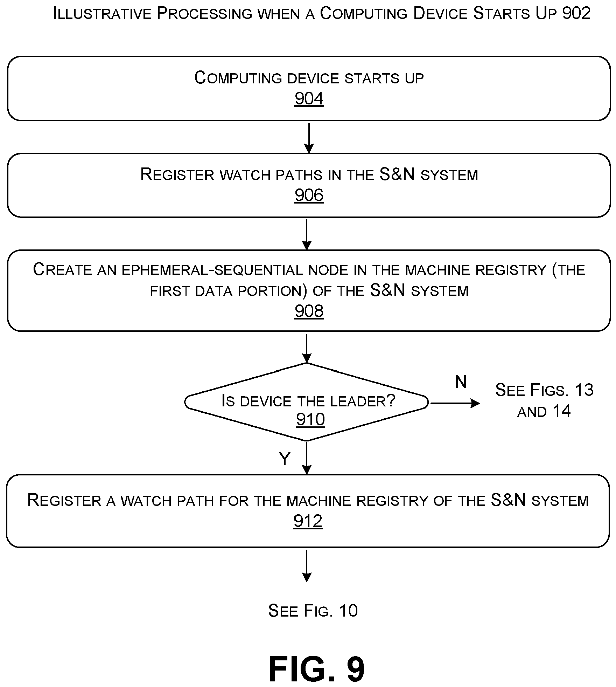

Figs. 9-18 show processes that explain the operation of the distributed system of Section A in flowchart form. Since the principles underlying the operation of the distributed system have already been described in Section A, some operations will be addressed in summary fashion in this section. As noted in the prefatory part of the Detailed Description, each flowchart is expressed as a series of operations performed in a particular order. But the order of these operations is merely representative, and can be varied in any manner.

Further, Figs. 9-18 will be explained with reference to the distributed system 402 of Fig. 4 in conjunction with the data structure 202 of Fig. 2. To simplify explanation, these figures will refer to one particular computing device in this distributed system 402 as computing device X. Computing device X has a bucket manager X_{BM} and an application instance X_{APP}. For example, with reference to Fig. 4, the computing device X may correspond to the computing device X 404, the bucket manager X_{BM} may correspond to the bucket manager 414, and the application instance X_{APP} may correspond to the application instance A 410.

Fig. 9 shows a process 902 performed by a bucket manager X_{BM} when the computing device X starts up. More specifically, in block 904, the computing device X starts up. In block 906, the bucket manager X_{BM} interacts with the S&N system 108 to register watch paths. More specifically, the bucket manager X_{BM} registers to receive a notification under the "Machine2Buckets" path (in the second data portion 206) for changes to assignment information pertinent to the computing device X. The bucket manager X_{BM} also registers to receive information under the "Bucket2Machine" data path (in the third data portion 208) for all buckets. Given a specified bucket, this information reveals which computing device owns the bucket. In block 908, the bucket manager XBM creates an ephemeral-sequential node under the "Machines" data path (in the first data portion 204), to thereby register its presence and the timing at which it joined the distributed system 402.

In block 910, the bucket manager X_{BM} determines whether it is the leader. The bucket manager X_{BM} can perform this task by determining whether its ephemeral-sequential node is the first-created node in the first data portion 204. If so, the bucket manager X_{BM} for the computing device X takes on the role as leader. In block 912, the bucket manager X_{BM} then registers a watch path to receive notifications when any data node in the first data portion 204 changes. These nodes will change, for instance, when a new computing device joins the distributed system 402, or when an existing computing device leaves the distributed system 402. Alternatively, if block 910 is answered in the negative, then the computing device X assumes the role as follower. (Although not reflected in Fig. 9, a leader computing device simultaneously operates as a follower computing device.)

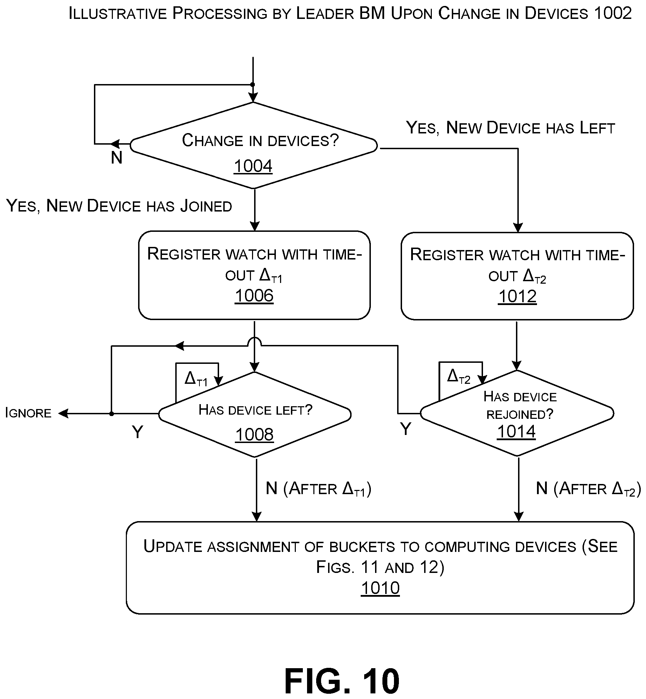

Figs. 10-12 show operations performed by the bucket manager X_{BM} of the computing device X, when acting in a leader role. Starting with Fig. 10, this figure shows a process 1002 for initiating an update to the assignments of the computing devices in the distributed system 402. In block 1004, the bucket manager X_{BM} determines whether there is any change to computing devices in the distributed system 402. The bucket manager X_{BM} determines there is a change when it receive a notification from the S&N system 108 (under the "Machines" path), notifying it of a change to one or more data nodes in the first data portion 204.

Assume that the bucket manager X_{BM} specifically determines that a new computing device has joined the distributed system. If so, in block 1006, the bucket manager X_{BM} registers a watch with a time period of Δ_{T1}. This time period corresponds to a parameter set by the application instance X_{APP} upon initialization of the bucket manager X_{BM}. In block 1008, the bucket manager X_{BM} determines whether the new computing device has subsequently left the distributed system 402. If this event occurs within the time period defined by Δ_{T1} then the bucket manager 414 will ignore new computing device. On the other hand, in block 1010, the bucket manager X_{BM} will begin updating the assignments of buckets to computing devices if the time period Δ_{T1} expires without the removal of the new computing device. That is, at this juncture, the bucket manager X_{BM} considers the new computing device to be stable.

Alternatively assume that the bucket manager X_{BM} determines, in block 1004, that an existing computing device has left the distributed system 402. If so, in block 1012, the bucket manager X_{BM} registers a watch with a time period of Δ_{T2}. In block 1014, the bucket manager X_{BM} determines whether the computing device that has left has rejoined the distributed system 402. If this event occurs within the time period defined by Δ_{T2} then the bucket manager X_{BM} will ignore the departure of the computing device. In block 1010, the bucket manager X_{BM} will begin updating the assignment of buckets to computing devices if the time period Δ_{T2} expires without the reunification of the computing device that has left the distributed system 402.

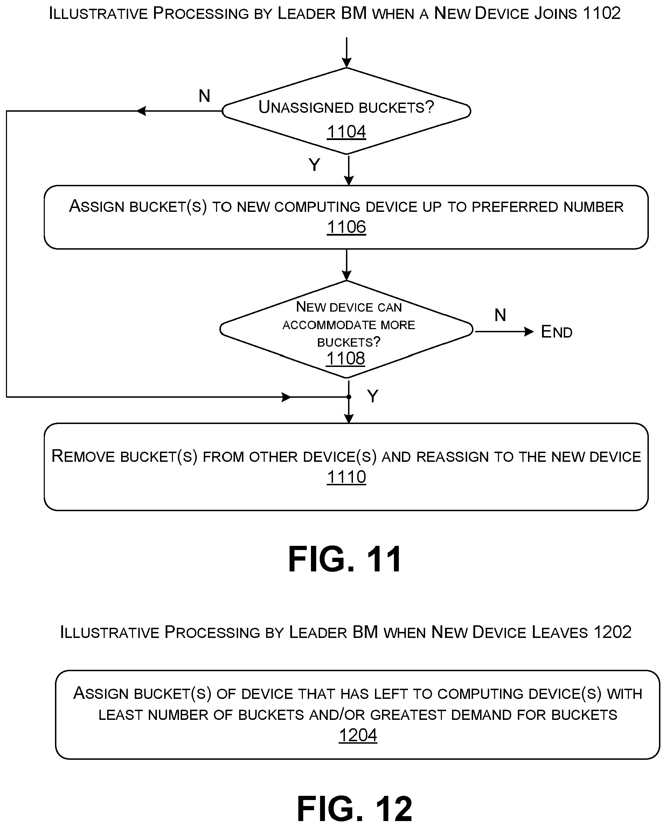

Fig. 11 shows a process 1102 whereby the bucket manager X_{BM} updates assignments when a new computing device joins the distributed system 402. In block 1104, the bucket manager X_{BM} determines whether there are any unassigned buckets. If so, in block 1106, the bucket manager X_{BM} can assign a number of buckets to the new computing device, corresponding to the preferred number of buckets specified in the set of initialization parameters. In block 1108, the bucket manager X_{BM} determines whether the computing device can accept more buckets, yet there are no more unassigned buckets to give to it. If so, in block 1110, the bucket manager X_{BM} can remove buckets from one or more other computing devices and reassign these buckets to the newly-joined computing device. For example, the bucket manager X_{BM} can remove buckets from at least one existing computing device that has more than its preferred number, and reassign those buckets to the newly-joined computing device.

Fig. 12 shows a process 1202 in which the bucket manager X_{BM} updates assignments when an existing computing device leaves the distributed system 402. In block 1204, the bucket manager X_{BM} assigns one or more buckets from the departed computing device to one or more existing computing devices having the least number of buckets, or which otherwise express the greatest demand for additional buckets.

Note that the bucket allocation strategy described in Figs. 11 and 12 is set forth in the spirit of illustration not limitation. Other implementations can use other strategies to distribute buckets to machines upon the introduction and removal of computing devices in the distributed system 402. For example, in another case, a leader computing device can allow a subset of computing devices to accept no buckets. The distributed system 402 can rely on these unburdened computing devices upon the occurrence of a prescribed failure condition in the distributed system 402, such as a service metric falling below a prescribed threshold.

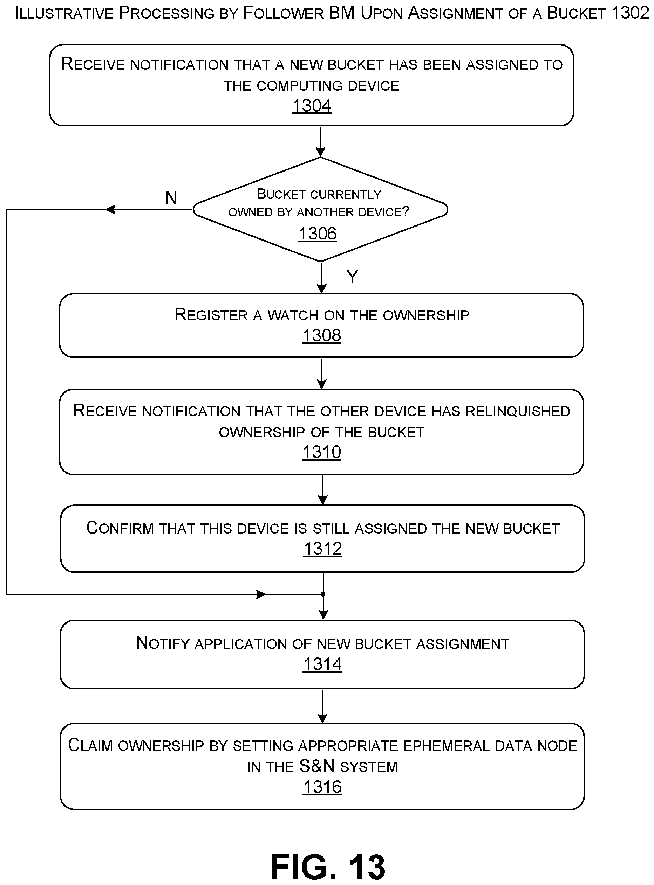

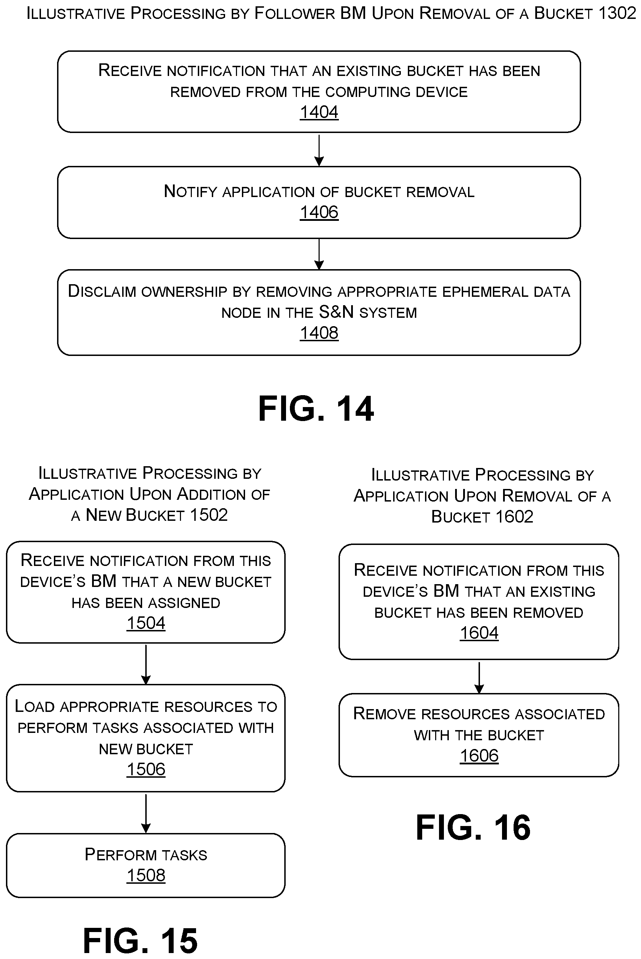

Figs. 13 and 14 show operations performed by the bucket manager X_{BM} of the computing device X when acting in a follower role. More specifically, Fig. 13 shows a process 1302 performed by the bucket manager X_{BM} when the bucket manager X_{BM} discovers that it has been assigned at least one new bucket by the leader. The leader may correspond to the bucket manager of another computing device (for example, bucket manager Y_{BM} of computing device Y), or the bucket manager X_{BM} of the same computing device X.

In block 1304, the bucket manager X_{BM} receives a notification from the S&N system 108 that informs it that a new bucket has been assigned to its computing device. It receives this notification because it has previously registered a watch on the "Machine2Buckets" data path, for computing device X. In block 1306, the bucket manager X_{BM} determines whether the bucket that has been assigned is currently owned by another computing device. It performs this task by interrogating the "Bucket2Machine" data path to discover whether it contains any data. Assume that block 1306 is answered in the affirmative. In block 1308, the bucket manager 414 registers a watch on the "Bucket2Machine" data path. In block 1310, the bucket manager X_{BM} receives a notification that the device that was previously claiming ownership of the bucket has relinquished that ownership. In block 1312, the bucket manager X_{BM} confirms whether it is still assigned the bucket under consideration by again checking the "Machine2Buckets" data path.

At this juncture, the bucket manager X_{BM} is ready assume ownership over the newly-assigned bucket. In block 1314, the bucket manager X_{BM} uses an AddBucket callback to notify the application instance X_{APP} associated with the computing device X that it should begin processing tasks for the newly assigned bucket. In block 1316, the bucket manager X_{BM} formally claims ownership of the newly-assigned bucket by setting an appropriate data node in the third data portion 208, that is, under the "Bucket2Machine" data path.

Fig. 14 shows a process 1402 performed by the bucket manager X_{BM} of the follower computing device X upon the removal a bucket assigned to it. In block 1404, the bucket manager X_{BM} receives a notification under the "Machine2Buckets" data path, indicating that a bucket previously assigned to it has been removed. In block 1406, the bucket manager X_{BM} responds by notifying the application instance X_{APP} running on the computing device X to remove a previously-assigned bucket. In block 1408, the bucket manager X_{BM} formally disclaims ownership of the removed bucket by removing an appropriate ephemeral data node in the third data portion 208, under the "Bucket2Machine" data path.

Figs. 15 and 16 show operations performed by an application instance X_{APP} upon receiving notification of a new bucket (with respect to Fig. 15) or the removal of an existing bucket (with respect to Fig. 16). More specifically, Fig. 15 shows a process 1502 for handling the case in which a new bucket is assigned to the application instance X_{APP}. In block 1504, the application instance X_{APP} receives a notification from its associated bucket manager X_{BM} that a new bucket has been assigned to it. In block 1506, the application instance X_{APP} loads appropriate resources that enable it to perform tasks associated with the newly-assigned bucket. In block 1508, the application instance X_{APP} performs those tasks (e.g., upon being fed these tasks by a work management component).

Fig. 16 shows a process 1602 for handling the case in which an existing bucket is removed by the application instance X_{APP}. In block 1604, the application instance X_{APP} receives a notification from its associated bucket manager X_{BM} that an existing bucket has been removed. In block 1606, the application instance X_{APP} removes resources that it has previously used to process tasks associated with the bucket that has now been removed.

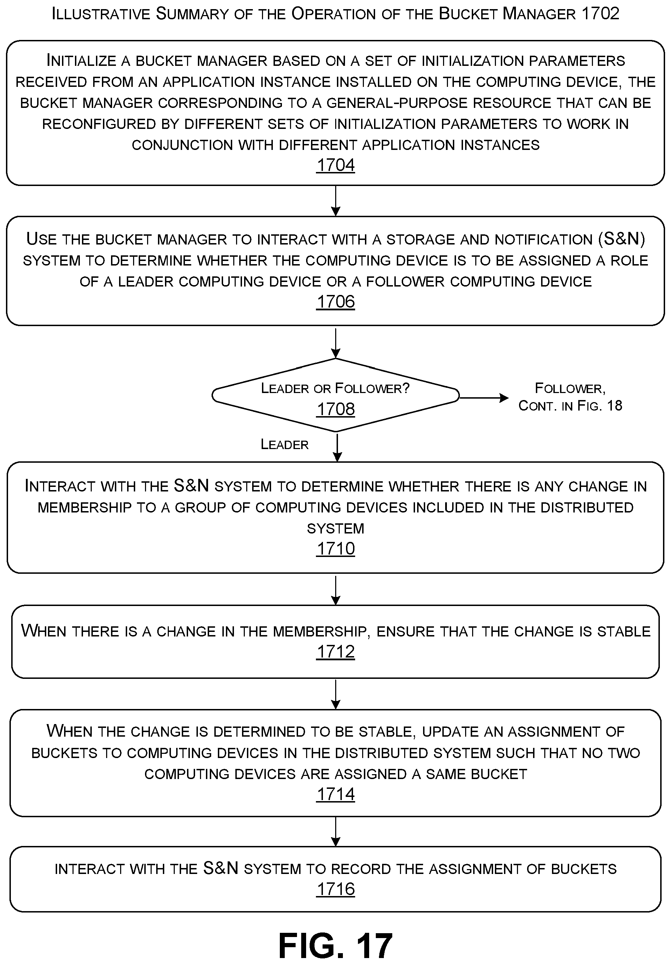

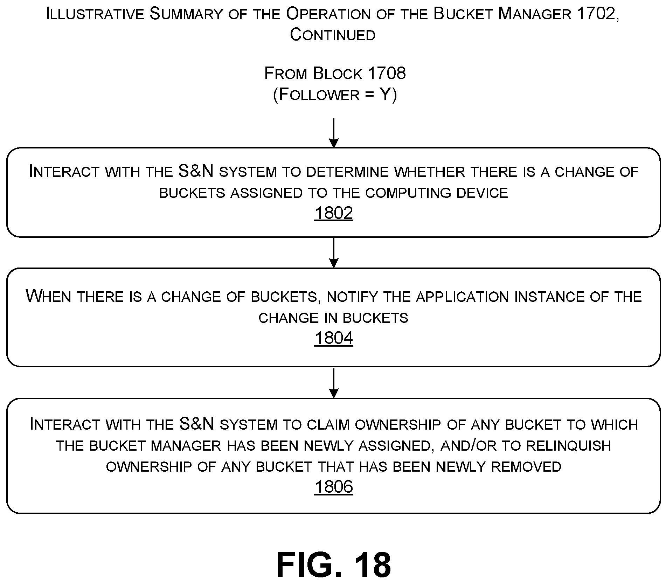

Figs. 17 and 18 together show a process 1702 that provides a summary of the operations performed by a bucket manager X_{BM}, in both its leader and follower roles. Again assume that the bucket manager X_{BM} is associated with the computing device X.

In block 1704, the process 1702 involves initializing the bucket manager X_{BM} based on initialization parameters received from the application instance X_{APP}. The bucket manager X_{BM} corresponds to a general-purpose component that can be reconfigured by different sets of initialization parameters to work in conjunction with different application instances. In blocks 1706 and 1708, the bucket manager X_{BM} interacts with the S&N system 108 to determine whether the computing device X 404 is to be assigned a role of a leader computing device.

When operating in a leader role, in block 1710, the bucket manager X_{BM} interacts with the S&N system 108 to determine whether there is any change in membership to a group of computing devices included in the distributed system 402. In block 1712, when there is a change in the membership, the bucket manager X_{BM} ensures that the change is stable. In block 1714, when the change is determined to be stable, the bucket manager X_{BM} updates an assignment of buckets to computing devices in the distributed system 402 such that no two computing devices are assigned a same bucket, each bucket corresponding to an allotment of work to be performed. In block 1716, the bucket manager X_{BM} interacts with the S&N system 108 to record the assignment of buckets.

When operating in a follower role, in block 1802 of Fig. 18, the bucket manager X_{BM} interacts with the S&N system 108 to determine whether there is a change of buckets assigned to the computing device X. In block 1804, when there is a change of buckets, the bucket manager X_{BM} notifies the application instance X_{APP} of the change in buckets. In block 1806, the bucket manager X_{BM} interacts with the S&N system 108 to claim ownership of any bucket to which the bucket manager X_{BM} has been newly assigned, and/or to relinquish ownership of any bucket that has been newly removed.

### C. Representative Computing Device

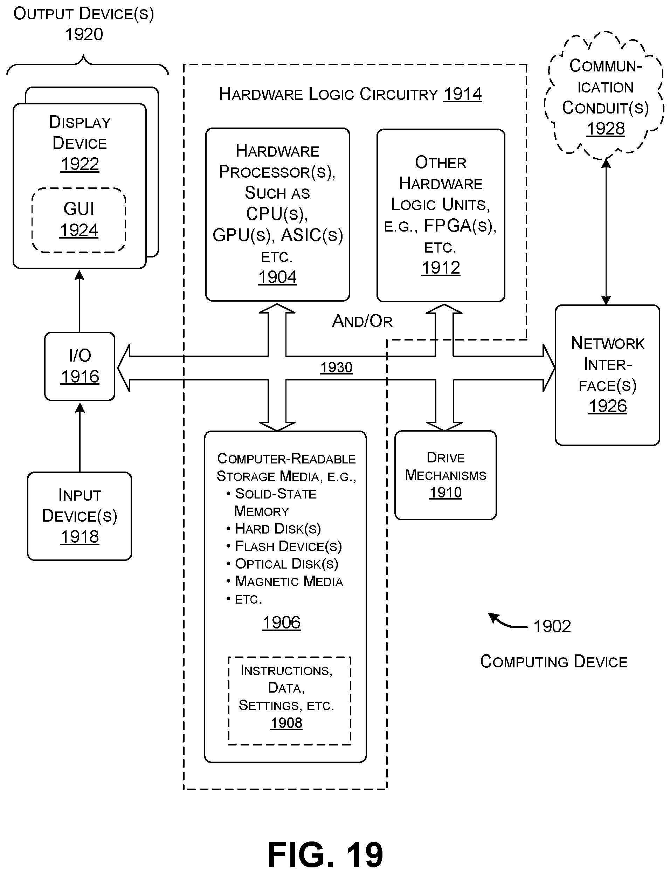

Fig. 19 shows a computing device 1902 that can be used to implement any aspect of the mechanisms set forth in the above-described figures. For instance, with reference to Fig. 4, the type of computing device 1902 shown in Fig. 19 can be used to implement any computing device (404, 406, 408) in the distributed system 402, or any computing device that is used to implement the S&N system 108, etc. In all cases, the computing device 1902 represents a physical and tangible processing mechanism.

The computing device 1902 can include one or more hardware processors 1904. The hardware processor(s) can include, without limitation, one or more Central Processing Units (CPUs), and/or one or more Graphics Processing Units (GPUs), and/or one or more Application Specific Integrated Circuits (ASICs), etc. More generally, any hardware processor can correspond to a general-purpose processing unit or an application-specific processor unit.

The computing device 1902 can also include computer-readable storage media 1906, corresponding to one or more computer-readable media hardware units. The computer-readable storage media 1906 retains any kind of information 1908, such as machine-readable instructions, settings, data, etc. Without limitation, for instance, the computer-readable storage media 1906 may include one or more solid-state devices, one or more magnetic hard disks, one or more optical disks, magnetic tape, and so on. Any instance of the computer-readable storage media 1906 can use any technology for storing and retrieving information. Further, any instance of the computer-readable storage media 1906 may represent a fixed or removable unit of the computing device 1902. Further, any instance of the computer-readable storage media 1906 may provide volatile or non-volatile retention of information.

The computing device 1902 can utilize any instance of the computer-readable storage media 1906 in different ways. For example, any instance of the computer-readable storage media 1906 may represent a hardware memory unit (such as Random Access Memory (RAM)) for storing transient information during execution of a program by the computing device 1902, and/or a hardware storage unit (such as a hard disk) for retaining/archiving information on a more permanent basis. In the latter case, the computing device 1902 also includes one or more drive mechanisms 1910 (such as a hard drive mechanism) for storing and retrieving information from an instance of the computer-readable storage media 1906.

The computing device 1902 may perform any of the functions described above when the hardware processor(s) 1904 carry out computer-readable instructions stored in any instance of the computer-readable storage media 1906. For instance, the computing device 1902 may carry out computer-readable instructions to perform each block of the processes described in Section B.

Alternatively, or in addition, the computing device 1902 may rely on one or more other hardware logic units 1912 to perform operations using a task-specific collection of logic gates. For instance, the hardware logic unit(s) 1912 may include a fixed configuration of hardware logic gates, e.g., that are created and set at the time of manufacture, and thereafter unalterable. Alternatively, or in addition, the other hardware logic unit(s) 1912 may include a collection of programmable hardware logic gates that can be set to perform different application-specific tasks. The latter category of devices includes, but is not limited to Programmable Array Logic Devices (PALs), Generic Array Logic Devices (GALs), Complex Programmable Logic Devices (CPLDs), Field-Programmable Gate Arrays (FPGAs), etc.

Fig. 19 generally indicates that hardware logic circuitry 1914 includes any combination of the hardware processor(s) 1904, the computer-readable storage media 1906, and/or the other hardware logic unit(s) 1912. That is, the computing device 1902 can employ any combination of the hardware processor(s) 1904 that execute machine-readable instructions provided in the computer-readable storage media 1906, and/or one or more other hardware logic unit(s) 1912 that perform operations using a fixed and/or programmable collection of hardware logic gates. More generally stated, the hardware logic circuitry 1914 corresponds to one or more hardware logic units of any type(s) that perform operations based on logic stored in and/or otherwise embodied in the hardware logic unit(s).

In some cases (e.g., in the case in which the computing device 1902 represents a user computing device), the computing device 1902 also includes an input/output interface 1916 for receiving various inputs (via input devices 1918), and for providing various outputs (via output devices 1920). Illustrative input devices include a keyboard device, a mouse input device, a touchscreen input device, a digitizing pad, one or more static image cameras, one or more video cameras, one or more depth camera systems, one or more microphones, a voice recognition mechanism, any movement detection mechanisms (e.g., accelerometers, gyroscopes, etc.), and so on. One particular output mechanism may include a display device 1922 and an associated graphical user interface presentation (GUI) 1924. The display device 1922 may correspond to a liquid crystal display device, a light-emitting diode display (LED) device, a cathode ray tube device, a projection mechanism, etc. Other output devices include a printer, one or more speakers, a haptic output mechanism, an archival mechanism (for storing output information), and so on. The computing device 1902 can also include one or more network interfaces 1926 for exchanging data with other devices via one or more communication conduits 1928. One or more communication buses 1930 communicatively couple the above-described units together.

The communication conduit(s) 1928 can be implemented in any manner, e.g., by a local area computer network, a wide area computer network (e.g., the Internet), point-to-point connections, etc., or any combination thereof. The communication conduit(s) 1928 can include any combination of hardwired links, wireless links, routers, gateway functionality, name servers, etc., governed by any protocol or combination of protocols.

Fig. 19 shows the computing device 1902 as being composed of a discrete collection of separate units. In some cases, the collection of units may correspond to discrete hardware units provided in a computing device chassis having any form factor. In other cases, the computing device 1902 can include a hardware logic unit that integrates the functions of two or more of the units shown in Fig. 1. For instance, the computing device 1902 can include a system on a chip (SoC or SOC), corresponding to an integrated circuit that combines the functions of two or more of the units shown in Fig. 19.

In closing, the functionality described herein can employ various mechanisms to ensure that any user data is handled in a manner that conforms to applicable laws, social norms, and the expectations and preferences of individual users. For example, the functionality can allow a user to expressly opt in to (and then expressly opt out of) the provisions of the functionality. The functionality can also provide suitable security mechanisms to ensure the privacy of the user data (such as data-sanitizing mechanisms, encryption mechanisms, password-protection mechanisms, etc.).

Further, the description may have set forth various concepts in the context of illustrative challenges or problems. This manner of explanation is not intended to suggest that others have appreciated and/or articulated the challenges or problems in the manner specified herein. Further, this manner of explanation is not intended to suggest that the subject matter recited in the claims is limited to solving the identified challenges or problems; that is, the subject matter in the claims may be applied in the context of challenges or problems other than those described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing device (404, 1902) for operation within a distributed system (402) of computing devices (404, 406, 408), the distributed system (402) comprising a storage and notification, S&N, system (108), the S&N system (108) being configured to store data nodes in a hierarchical data structure that reflect the assignment-related state of the distributed system, and to notify the computing devices of changes in the data nodes, the computing device (404, 1902) comprising:
an application instance (410) for performing a prescribed service;
a bucket manager (414) configured to:
receive a set of initialization parameters from the application instance (410);
allocate work to the computing devices in unit of buckets, in a manner governed by the set of initialization parameters, each bucket corresponding to an allotment of work to be performed by a computing device to which it is assigned;
interact with the S&N system (108) to determine whether the computing device (404, 1902) is to be assigned a role of a leader computing device;
and the bucket manager (414) further configured to:
when operating in a leader role:
interact with the S&N system (108) to determine whether there is any change in membership of the computing devices (404, 406, 408) included in the distributed system (402);
when there is a change in the membership, ensure that the change is stable by waiting, at maximum, a prescribed amount of time, the prescribed amount of time being specified by the set of initialization parameters;
when the change is determined to be stable, update an assignment of buckets to computing devices (404, 406, 408) in the distributed system (402) such that no two computing devices are assigned a same bucket, each bucket corresponding to an allotment of work to be performed; and
interact with the S&N system (108) to record the assignment of buckets; and
when operating in a follower role:
interact with the S&N system (108) to determine whether there is a change of buckets assigned to the computing device (404, 1902);
when there is a change of buckets, notify the application instance (410) of the change in buckets; and
interact with the S&N system (108) to claim ownership of any bucket that has been newly assigned, and/or to relinquish ownership of any bucket that has been newly removed,
the computing device (404, 1902) including hardware logic circuitry (1914), the hardware logic circuitry (1914) including: (a) one or more hardware processors (1904) that perform operations by executing machine-readable instructions (1908) stored in a memory (1906), and/or (b) one or more other hardware logic units (1912) that perform operations using a task-specific collection of logic gates.

2. The computing device of claim **1,** wherein the S&N system provides:
a data store for storing data nodes in a hierarchical data structure; and
a notification component configured to notify computing devices of changes in the data nodes.

3. The computing device of claim 2, wherein the data store includes:
a first set of data nodes that identify computing devices that are currently members of the distributed system;
a second set of data nodes that identify buckets currently assigned to each computing device in the distributed system by a leader bucket manager; and
a third set of data nodes that identify ownership of buckets, as asserted by the computing devices in the distributed system,
wherein the first set of data nodes is non-persistent because these data nodes will automatically be removed upon a termination of a session involving the application instance,
wherein the second set of nodes is persistent because these nodes will not be automatically removed upon a termination of a session involving the application instance, and
wherein the third set of nodes is also non-persistent.

4. The computing device of claim 1, wherein each bucket is associated with a bucket identifier, and wherein assignment of a task to a bucket is determined by:
creating a hash of data associated with the task; and
mapping the hash to a bucket identifier associated with a particular bucket.

5. The computing device of claim 1, wherein, in the leader role, the bucket manager responds to a determination that a new computing device has joined by ensuring that the change is stable by:
waiting, at maximum, the prescribed amount of time to determine if the new computing device is removed; and
identifying the new computing device as stable if the new computing device has not been removed within the prescribed amount of time.

6. The computing device of claim 1, wherein, in the leader role, the bucket manager responds to a determination that an existing computing device has been removed by ensuring that the change is stable by:
waiting, at maximum, the prescribed amount of time to determine whether the existing computing device returns to the group of computing devices; and
designating the existing computing device as having left the group if the existing computing does not return within the prescribed amount of time.

7. The computing device of claim 1, wherein, in the follower role, the bucket manager responds to a determination that a new bucket has been assigned to it by:
interacting with the S&N system to determine whether the new bucket is currently owned by another computing device; and
when the new bucket is owned by another computing device, waiting until the S&N system indicates that the other computing device has relinquished ownership of the new bucket before claiming ownership of the new bucket.

8. The computing device of claim 1, wherein the prescribed service corresponds to:
processing one or more data entries associated with one or more respective web resources, to produce one or more processed data entries; and
uploading the processed data entries to a distributed index system,
a search engine using the distributed index system to match input queries to web resources.

9. The computing device of claim 3, wherein the first set of data nodes also includes data associated therewith that indicates an order of the data nodes in the first set relative to each other.

10. The computing device of claim 1, wherein the bucket manager also interacts with another application instance that performs another prescribed service, that other application instance being associated with another set of initialization parameters.

11. The computing device of claim 1, wherein one initialization parameter specifies a number of buckets that the computing device prefers to own.

12. A method (1702, 1802) for governing operation of a computing device (404, 1902) within a distributed system (404) of computing devices (404, 406, 408), the distributed system (402) comprising a storage and notification, S&N, system (108), the S&N system (108) being configured to store data nodes in a hierarchical data structure that reflect the assignment-related state of the distributed system, and to notify the computing devices of changes in the data nodes, the computing device (404, 1902) comprising:
initializing (1704) a bucket manager (414) based on a set of initialization parameters received from an application instance (410) installed on the computing device (404, 1902), the bucket manager (414) corresponding to a general resource that is reconfigurable by different sets of initialization parameters to work in conjunction with different application instances and configured to allocate work to the computing devices in unit of buckets, in a manner governed by the set of initialization parameters, each bucket corresponding to an allotment of work to be performed by a computing device to which it is assigned;
using the bucket manager (414) to:
interact (1706) with the S&N system (108) to determine whether the computing device (404, 1902) is to be assigned a role of a leader computing device;
and the bucket manager (414) further configured to:
when operating in a leader role:
interact (1710) with the S&N system (108) to determine whether there is any change in membership to a group of computing devices (404, 406, 408) included in the distributed system (402);
when there is a change in the membership, ensure (1712) that the change is stable by waiting, at maximum, a prescribed amount of time, the prescribed amount of time being specified by the set of initialization parameters;
when the change is determined to be stable, update (1714) an assignment of buckets to computing devices (404, 406, 408) in the distributed system (402) such that no two computing devices are assigned a same bucket, each bucket corresponding to an allotment of work to be performed,
assignment of a task to a bucket being determined by creating a hash of data associated with the task, and mapping the hash to a bucket identifier associated with a particular bucket; and
interact (1716) with the S&N system (108) to record the assignment of buckets; and
when operating in a follower role:
interact (1802) with the S&N system (108) to determine whether there is a change of buckets assigned to the computing device (404, 1902);
when there is a change of buckets, notify (1804) the application instance (410) of the change in buckets; and
interact (1806) with the S&N system (108) to claim ownership of any bucket that has been newly assigned, and/or to relinquish ownership of any bucket that has been newly removed.

13. A distributed system (402), comprising:
plural computing devices (404, 406, 408);
a storage and notification, S&N, system (108), the S&N system (108) being configured to store data nodes in a hierarchical data structure that reflect the assignment-related state of the distributed system, and to notify the computing devices of changes in the data nodes;
each computing device (404, 1902) including a bucket manager (414) and an application instance (410);
the bucket manager (414) of each computing device (404, 1902) being configured to:
receive a set of initialization parameters from the application instance (410);
allocate work to the computing devices in unit of buckets, in a manner governed by the set of initialization parameters, each bucket corresponding to an allotment of work to be performed by a computing device to which it is assigned;
interact with the S&N system (108) to determine whether the computing device (404, 1902) is to be assigned a role of a leader computing device;
and the bucket manager (414) further configured to:
when operating in a leader role:
interact with the S&N system (108) to determine whether there is any change in membership of the computing devices (404, 406, 408) included in the distributed system (402);
when there is a change in the membership, ensure that the change is stable by waiting, at maximum, a prescribed amount of time, the prescribed amount of time being specified by the set of initialization parameters;
when the change is determined to be stable, update an assignment of buckets to computing devices (404, 406, 408) in the distributed system (402) such that no two computing devices are assigned a same bucket, each bucket corresponding to an allotment of work to be performed; and
interact with the S&N system (108) to record the assignment of buckets; and
when operating in a follower role:
interact with the S&N system (108) to determine whether there is a change of buckets assigned to the computing device (404, 1902);
when there is a change of buckets, notify the application instance (410) of the change in buckets; and
interact with the S&N system (108) to claim ownership of any bucket that has been newly assigned, and/or to relinquish ownership of any bucket that has been newly removed,
each computing device (402, 1902) including hardware logic circuitry (1914), the hardware logic circuitry (1914) including: (a) one or more hardware processors (1904) that perform operations by executing machine-readable instructions (1908) stored in a memory (1906), and/or (b) one or more other hardware logic units (1912) that perform operations using a task-specific collection of logic gates.

14. The distributed system of claim 13, further including a work-routing component configured to:
send a task request to a particular computing device in the distributed system; and
when the particular computing device does not own a bucket associated with the task request, rely on the particular computing device to route the task request to another computing device that currently owns the bucket.

15. The distributed system of claim 13, further including a work-routing component configured to:
receive a hash of data associated with a task;
map the hash to a bucket identifier associated with a particular bucket; and
route a task request to a computing device currently associated with the bucket.

## Patentansprüche

1. Rechenvorrichtung (404, 1902) zum Betrieb innerhalb eines verteilten Systems (402) von Rechenvorrichtungen (404, 406, 408), wobei das verteilte System (402) ein Speicher- und Benachrichtigungs-, S&N-, System (108) umfasst, wobei das S&N-System (108) dazu ausgelegt ist, Datenknoten in einer hierarchischen Datenstruktur zu speichern, die den zuweisungsbezogenen Zustand des verteilten Systems widerspiegelt, und die Rechenvorrichtungen über Änderungen in den Datenknoten zu benachrichtigen, wobei die Rechenvorrichtung (404, 1902) umfasst:
eine Anwendungsinstanz (410) zur Durchführung eines vorgeschriebenen Dienstes;
einen Bucket-Manager (414), der dazu ausgelegt ist:
Empfangen eines Satzes von Initialisierungsparametern von der Anwendungsinstanz (410);
Zuweisen von Arbeit in Einheiten von Buckets an die Rechenvorrichtungen auf eine durch den Satz von Initialisierungsparametern geregelte Weise, wobei jeder Bucket einem Arbeitspensum entspricht, das von einer Rechenvorrichtung durchzuführen ist, der er zugewiesen ist;
Interagieren mit dem S&N-System (108), um zu bestimmen, ob der Rechenvorrichtung (404, 1902) die Rolle einer Leader-Rechenvorrichtung zuzuweisen ist;
und wobei der Bucket-Manager (414) ferner dazu ausgelegt ist:
bei Betrieb in einer Leader-Rolle:
Interagieren mit dem S&N-System (108), um zu bestimmen, ob eine Änderung in einer Mitgliedschaft der im verteilten System (402) enthaltenen Rechenvorrichtungen (404, 406, 408) vorliegt;
wenn eine Änderung in der Mitgliedschaft vorliegt, Sicherstellen, dass die Änderung stabil ist, indem maximal für eine vorgeschriebene Zeitspanne gewartet wird, wobei die vorgeschriebene Zeitspanne durch den Satz von Initialisierungsparametern angegeben wird;
wenn die Änderung als stabil bestimmt wird, Aktualisieren einer Zuweisung von Buckets zu Rechenvorrichtungen (404, 406, 408) im verteilten System (402), derart dass keinen zwei Rechenvorrichtungen ein gleicher Bucket zugewiesen wird, wobei jeder Bucket einem durchzuführenden Arbeitspensum entspricht; und
Interagieren mit dem S&N-System (108), um die Zuweisung von Buckets aufzuzeichnen; und
bei Betrieb in einer Follower-Rolle:
Interagieren mit dem S&N-System (108), um zu bestimmen, ob eine Änderung von der Rechenvorrichtung (404, 1902) zugewiesenen Buckets vorliegt;
wenn eine Änderung von Buckets vorliegt, Benachrichtigen der Anwendungsinstanz (410) über die Änderung von Buckets; und
Interagieren mit dem S&N-System (108), um einen Besitz eines neu zugewiesenen Buckets zu beanspruchen und/oder einen Besitz eines neu entfernten Buckets aufzugeben,
wobei die Rechenvorrichtung (404, 1902) eine Hardwarelogikschaltung (1914) umfasst, wobei die Hardwarelogikschaltung (1914) umfasst: (a) einen oder mehrere Hardwareprozessoren (1904), die Operationen durch Ausführen von maschinenlesbaren Anweisungen (1908) durchführen, die in einem Arbeitsspeicher (1906) gespeichert sind, und/oder (b) eine oder mehrere andere Hardwarelogikeinheiten (1912), die Operationen unter Verwendung einer aufgabenspezifischen Sammlung von Logikgattern durchführen.

2. Rechenvorrichtung nach Anspruch 1, wobei das S&N-System bereitstellt:
einen Datenspeicher zum Speichern von Datenknoten in einer hierarchischen Datenstruktur; und
eine Benachrichtigungskomponente, die dazu ausgelegt ist, Rechenvorrichtungen über Änderungen in den Datenknoten zu benachrichtigen.

3. Rechenvorrichtung nach Anspruch 2, wobei der Datenspeicher umfasst:
einen ersten Satz von Datenknoten, der Rechenvorrichtungen identifiziert, die derzeit Mitglieder des verteilten Systems sind;
einen zweiten Satz von Datenknoten, der Buckets identifiziert, die derzeit jeder Rechenvorrichtung im verteilten System durch einen Leader-Bucket-Manager zugewiesen sind; und
einen dritten Satz von Datenknoten, der den Besitz von Buckets identifiziert, wie von den Rechenvorrichtungen im verteilten System geltend gemacht,
wobei der erste Satz von Datenknoten nicht dauerhaft ist, da diese Datenknoten bei Beendigung einer Sitzung mit der Anwendungsinstanz automatisch entfernt werden,
wobei der zweite Satz von Knoten dauerhaft ist, da diese Knoten bei Beendigung einer Sitzung mit der Anwendungsinstanz nicht automatisch entfernt werden, und
wobei der dritte Satz von Knoten ebenfalls nicht dauerhaft ist.

4. Rechenvorrichtung nach Anspruch 1, wobei jeder Bucket mit einer Bucket-Kennung verbunden ist und die Zuweisung einer Aufgabe zu einem Bucket bestimmt wird durch:
Erstellen eines Hashs von Daten, die mit der Aufgabe verbunden sind; und
Zuordnen des Hashs zu einer Bucket-Kennung, die einem bestimmten Bucket zugeordnet ist.

5. Rechenvorrichtung nach Anspruch 1, wobei der Bucket-Manager in der Leader-Rolle auf eine Bestimmung, dass eine neue Rechenvorrichtung beigetreten ist, reagiert, indem er sicherstellt, dass die Änderung stabil ist, durch:
Warten für maximal die vorgeschriebene Zeitspanne, um zu bestimmen, ob die neue Rechenvorrichtung entfernt wird; und
Identifizieren der neuen Rechenvorrichtung als stabil, wenn die neue Rechenvorrichtung innerhalb der vorgeschriebenen Zeitspanne nicht entfernt wurde.

6. Rechenvorrichtung nach Anspruch 1, wobei der Bucket-Manager in der Leader-Rolle auf eine Bestimmung, dass eine bestehende Rechenvorrichtung entfernt wurde, reagiert, indem er sicherstellt, dass die Änderung stabil ist, durch:
Warten für maximal die vorgeschriebene Zeitspanne, um zu bestimmen, ob die bestehende Rechenvorrichtung zur Gruppe der Rechenvorrichtungen zurückkehrt; und
Kennzeichnen der bestehenden Rechenvorrichtung als die Gruppe verlassen habend, wenn die bestehende Rechenvorrichtung innerhalb der vorgeschriebenen Zeitspanne nicht zurückkehrt.

7. Rechenvorrichtung nach Anspruch 1, wobei der Bucket-Manager in der Follower-Rolle auf eine Feststellung, dass ihm ein neuer Bucket zugewiesen wurde, reagiert durch:
Interagieren mit dem S&N-System, um zu bestimmen, ob der neue Bucket derzeit von einer anderen Rechenvorrichtung besessen wird; und
wenn der neue Bucket von einer anderen Rechenvorrichtung besessen wird, Warten, bis das S&N-System anzeigt, dass die andere Rechenvorrichtung den Besitz des neuen Buckets aufgegeben hat, bevor der Besitz des neuen Buckets beansprucht wird.

8. Rechenvorrichtung nach Anspruch 1, wobei der vorgeschriebene Dienst entspricht:
Verarbeiten eines oder mehrerer Dateneinträge, die einer oder mehreren jeweiligen Webressourcen zugeordnet sind, um einen oder mehrere verarbeitete Dateneinträge zu erstellen; und
Hochladen der verarbeiteten Dateneinträge in ein verteiltes Indexsystem,
wobei eine Suchmaschine das verteilte Indexsystem verwendet, um Eingabeabfragen mit Webressourcen abzugleichen.

9. Rechenvorrichtung nach Anspruch 3, wobei der erste Satz von Datenknoten auch diesen zugeordnete Daten umfasst, die eine Reihenfolge der Datenknoten im ersten Satz relativ zueinander angeben.

10. Rechenvorrichtung nach Anspruch 1, wobei der Bucket-Manager auch mit einer anderen Anwendungsinstanz interagiert, die einen anderen vorgeschriebenen Dienst durchführt, wobei diese andere Anwendungsinstanz einem anderen Satz von Initialisierungsparametern zugeordnet ist.

11. Rechenvorrichtung nach Anspruch 1, wobei ein Initialisierungsparameter eine Anzahl von Buckets angibt, die die Rechenvorrichtung zu besitzen bevorzugt.

12. Verfahren (1702, 1802) zum Regeln eines Betriebs einer Rechenvorrichtung (404, 1902) innerhalb eines verteilten Systems (404) von Rechenvorrichtungen (404, 406, 408), wobei das verteilte System (40) ein Speicher- und Benachrichtigungs-, S&N-, System (108) umfasst, wobei das S&N-System (108) dazu ausgelegt ist, Datenknoten in einer hierarchischen Datenstruktur zu speichern, die den zuweisungsbezogenen Zustand des verteilten Systems widerspiegelt, und die Rechenvorrichtungen über Änderungen in den Datenknoten zu benachrichtigen, wobei die Rechenvorrichtung (404, 1902) umfasst:
Initialisieren (1704) eines Bucket-Managers (414) basierend auf einem Satz von Initialisierungsparametern, der von einer auf der Rechenvorrichtung (404, 1902) installierten Anwendungsinstanz (410) empfangen wurde, wobei der Bucket-Manager (414) einer allgemeinen Ressource entspricht, die durch verschiedene Sätze von Initialisierungsparametern rekonfigurierbar ist, um in Verbindung mit verschiedenen Anwendungsinstanzen zu arbeiten, und dazu ausgelegt ist, Arbeit in Einheiten von Buckets an die Rechenvorrichtungen zuzuweisen, auf eine durch den Satz von Initialisierungsparametern geregelte Weise, wobei jeder Bucket einem Arbeitspensum entspricht, das von einer Rechenvorrichtung durchzuführen ist, der er zugewiesen ist;
Verwenden des Bucket-Managers (414) dazu:
Interagieren (1706) mit dem S&N-System (108), um zu bestimmen, ob der Rechenvorrichtung (404, 1902) die Rolle einer Leader-Rechenvorrichtung zuzuweisen ist;
und wobei der Bucket-Manager (414) ferner dazu ausgelegt ist:
bei Betrieb in einer Leader-Rolle:
Interagieren (1710) mit dem S&N-System (108), um zu bestimmen, ob eine Änderung in der Mitgliedschaft einer Gruppe von im verteilten System (402) enthaltenen Rechenvorrichtungen (404, 406, 408) vorliegt;
wenn eine Änderung in der Mitgliedschaft vorliegt, Sicherstellen (1712), dass die Änderung stabil ist, indem maximal für eine vorgeschriebene Zeitspanne gewartet wird, wobei die vorgeschriebene Zeitspanne durch den Satz von Initialisierungsparametern angegeben wird;
wenn die Änderung als stabil bestimmt wird, Aktualisieren (1714) einer Zuweisung von Buckets zu Rechenvorrichtungen (404, 406, 408) im verteilten System (402), derart dass keinen zwei Rechenvorrichtungen ein gleicher Bucket zugewiesen wird, wobei jeder Bucket einem durchzuführenden Arbeitspensum entspricht,
wobei die Zuweisung einer Aufgabe zu einem Bucket durch Erstellen eines Hashs von Daten, die der Aufgabe zugeordnet sind, und Zuordnen des Hashs zu einer Bucket-Kennung, die einem bestimmten Bucket zugeordnet ist, bestimmt wird; und
Interagieren (1716) mit dem S&N-System (108), um die Zuweisung von Buckets aufzuzeichnen; und
bei Betrieb in einer Follower-Rolle:
Interagieren (1802) mit dem S&N-System (108), um zu bestimmen, ob eine Änderung von der Rechenvorrichtung (404, 1902) zugewiesenen Buckets vorliegt;
wenn eine Änderung von Buckets vorliegt, Benachrichtigen (1804) der Anwendungsinstanz (410) über die Änderung von Buckets; und
Interagieren (1806) mit dem S&N-System (108), um einen Besitz eines neu zugewiesenen Buckets zu beanspruchen und/oder einen Besitz eines neu entfernten Buckets aufzugeben.

13. Verteiltes System (402), umfassend:
mehrere Rechenvorrichtungen (404, 406, 408);
ein Speicher- und Benachrichtigungs-, S&N-, System (108), wobei das S&N-System (108) dazu ausgelegt ist, Datenknoten in einer hierarchischen Datenstruktur zu speichern, die den zuweisungsbezogenen Zustand des verteilten Systems widerspiegelt, und die Rechenvorrichtungen über Änderungen in den Datenknoten zu benachrichtigen;
wobei jede Rechenvorrichtung (404, 1902) einen Bucket-Manager (414) und eine Anwendungsinstanz (410) umfasst;
wobei der Bucket-Manager (414) jeder Rechenvorrichtung (404, 1902) dazu ausgelegt ist:
Empfangen eines Satzes von Initialisierungsparametern von der Anwendungsinstanz (410);
Zuweisen von Arbeit in Einheiten von Buckets an die Rechenvorrichtungen auf eine durch den Satz von Initialisierungsparametern geregelte Weise, wobei jeder Bucket einem Arbeitspensum entspricht, das von einer Rechenvorrichtung durchzuführen ist, der er zugewiesen ist;
Interagieren mit dem S&N-System (108), um zu bestimmen, ob der Rechenvorrichtung (404, 1902) die Rolle einer Leader-Rechenvorrichtung zuzuweisen ist;
und wobei der Bucket-Manager (414) ferner dazu ausgelegt ist:
bei Betrieb in einer Leader-Rolle:
Interagieren mit dem S&N-System (108), um zu bestimmen, ob eine Änderung in einer Mitgliedschaft der im verteilten System (402) enthaltenen Rechenvorrichtungen (404, 406, 408) vorliegt;
wenn Mitgliedschaftsänderungen auftreten, Bestimmen, dass die Änderung stabil ist, indem bis zu einer durch den Satz von Initialisierungsparametern angegebenen vorgeschriebenen Zeitspanne gewartet wird;
wenn die Änderung als stabil bestimmt wird, Aktualisieren einer Zuweisung von Buckets zu Rechenvorrichtungen (404, 406, 408) im verteilten System (402), derart dass keinen zwei Rechenvorrichtungen ein gleicher Bucket zugewiesen wird, wobei jeder Bucket einem durchzuführenden Arbeitspensum entspricht; und
Interagieren mit dem S&N-System (108), um die Zuweisung von Buckets aufzuzeichnen; und
bei Betrieb in einer Follower-Rolle:
Interagieren mit dem S&N-System (108), um zu bestimmen, ob eine Änderung von der Rechenvorrichtung (404, 1902) zugewiesenen Buckets vorliegt;
wenn eine Änderung von Buckets vorliegt, Benachrichtigen der Anwendungsinstanz (410) über die Änderung von Buckets; und
Interagieren mit dem S&N-System (108), um einen Besitz eines neu zugewiesenen Buckets zu beanspruchen und/oder einen Besitz eines neu entfernten Buckets aufzugeben,
wobei jede Rechenvorrichtung (402, 1902) eine Hardwarelogikschaltung (1914) umfasst, wobei die Hardwarelogikschaltung (1914) umfasst: (a) einen oder mehrere Hardwareprozessoren (1904), die Operationen durch Ausführen von maschinenlesbaren Anweisungen (1908) durchführen, die in einem Arbeitsspeicher (1906) gespeichert sind, und/oder (b) eine oder mehrere andere Hardwarelogikeinheiten (1912), die Operationen unter Verwendung einer aufgabenspezifischen Sammlung von Logikgattern durchführen.

14. Verteiltes System nach Anspruch 13, ferner umfassend eine Arbeitsroutingkomponente, die dazu ausgelegt ist:
Senden einer Aufgabenanforderung an eine bestimmte Rechenvorrichtung im verteilten System; und
wenn die bestimmte Rechenvorrichtung keinen Bucket besitzt, der der Aufgabenanforderung zugeordnet ist, Vertrauen auf die bestimmte Rechenvorrichtung, die Aufgabenanforderung an eine andere Rechenvorrichtung weiterzuleiten, die den Bucket derzeit besitzt.

15. Verteiltes System nach Anspruch 13, ferner umfassend eine Arbeitsroutingkomponente, die dazu ausgelegt ist:
Empfangen eines Hashs von Daten, die einer Aufgabe zugeordnet sind;
Zuordnen des Hashs zu einer Bucket-Kennung, die einem bestimmten Bucket zugeordnet ist; und
Weiterleiten einer Aufgabenanforderung an eine Rechenvorrichtung, die derzeit dem Bucket zugeordnet ist.

## Revendications

1. Dispositif informatique (404, 1902) destiné à fonctionner au sein d'un système distribué (402) de dispositifs informatiques (404, 406, 408), le système distribué (402) comprenant un système de stockage et de notification, S&N, (108), le système S&N (108) étant configuré pour stocker des nœuds de données dans une structure de données hiérarchique qui reflète l'état lié aux affectations du système distribué, et pour notifier les dispositifs informatiques des changements dans les nœuds de données, le dispositif informatique (404, 1902) comprenant :
une instance d'application (410) pour réaliser un service prescrit ;
un gestionnaire de compartiments (414) configuré pour :
recevoir un ensemble de paramètres d'initialisation à partir de l'instance d'application (410) ;
attribuer du travail aux dispositifs informatiques par unités de compartiments, d'une manière régie par l'ensemble de paramètres d'initialisation, chaque compartiment correspondant à une attribution de travail à réaliser par un dispositif informatique auquel il est affecté ;
interagir avec le système S&N (108) pour déterminer si le dispositif informatique (404, 1902) doit se voir attribuer un rôle de dispositif informatique leader ;
et le gestionnaire de compartiments (414) étant en outre configuré pour :
lorsqu'il occupe un rôle de leader :
interagir avec le système S&N (108) pour déterminer s'il y a un changement dans l'appartenance des dispositifs informatiques (404, 406, 408) inclus dans le système distribué (402) ;
lorsqu'il y a un changement dans l'appartenance, s'assurer que le changement est stable en attendant, au maximum, une durée prescrite, la durée prescrite étant spécifiée par l'ensemble de paramètres d'initialisation ;
lorsque le changement est déterminé comme étant stable, mettre à jour une affectation de compartiments aux dispositifs informatiques (404, 406, 408) dans le système distribué (402) de sorte qu'aucun couple de dispositifs informatiques ne se voie attribuer le même compartiment, chaque compartiment correspondant à une attribution de travail à réaliser ; et
interagir avec le système S&N (108) pour enregistrer l'affectation de compartiments ; et
lorsqu'il occupe un rôle de suiveur :
interagir avec le système S&N (108) pour déterminer s'il y a un changement de compartiments affectés au dispositif informatique (404, 1902) ;
lorsqu'il y a un changement de compartiments, notifier l'instance d'application (410) du changement de compartiments ;
et
interagir avec le système S&N (108) pour revendiquer la propriété de tout compartiment nouvellement affecté et/ou pour renoncer à la propriété de tout compartiment nouvellement retiré,
le dispositif informatique (404, 1902) comportant des circuits logiques matériels (1914), les circuits logiques matériels (1914) comportant : (a) un ou plusieurs processeurs matériels (1904) qui réalisent des opérations en exécutant des instructions lisibles par machine (1908) stockées dans une mémoire (1906), et/ou (b) une ou plusieurs autres unités logiques matérielles (1912) qui réalisent des opérations à l'aide d'un groupe de portes logiques spécifique à une tâche.

2. Dispositif informatique selon la revendication 1, dans lequel le système S&N fournit :
un magasin de données pour stocker des nœuds de données dans une structure de données hiérarchique ; et
un composant de notification configuré pour notifier les dispositifs informatiques des changements dans les nœuds de données.

3. Dispositif informatique selon la revendication 2, dans lequel le magasin de données comporte :
un premier ensemble de nœuds de données qui identifient les dispositifs informatiques qui sont actuellement membres du système distribué ;
un deuxième ensemble de nœuds de données qui identifient les compartiments actuellement affectés à chaque dispositif informatique dans le système distribué par un gestionnaire de compartiments leader ; et
un troisième ensemble de nœuds de données qui identifient la propriété de compartiments, telle que revendiquée par les dispositifs informatiques dans le système distribué,
dans lequel le premier ensemble de nœuds de données est non persistant car ces nœuds de données seront automatiquement supprimés à la fin d'une session impliquant l'instance d'application,
dans lequel le deuxième ensemble de nœuds est persistant car ces nœuds ne seront pas automatiquement supprimés à la fin d'une session impliquant l'instance d'application, et
dans lequel le troisième ensemble de nœuds est également non persistant.

4. Dispositif informatique selon la revendication 1, dans lequel chaque compartiment est associé à un identifiant de compartiment, et dans lequel l'affectation d'une tâche à un compartiment est déterminée par :
la création d'un hachage de données associées à la tâche ; et
le mappage du hachage avec un identifiant de compartiment associé à un compartiment particulier.

5. Dispositif informatique selon la revendication 1, dans lequel, dans le rôle de leader, le gestionnaire de compartiments répond à une détermination qu'un nouveau dispositif informatique a rejoint en s'assurant que le changement est stable par :
l'attente, au maximum, de la durée prescrite pour déterminer si le nouveau dispositif informatique est retiré ; et
l'identification du nouveau dispositif informatique comme étant stable si le nouveau dispositif informatique n'a pas été retiré pendant la durée prescrite.

6. Dispositif informatique selon la revendication 1, dans lequel, dans le rôle de leader, le gestionnaire de compartiments répond à une détermination qu'un dispositif informatique existant a été retiré en s'assurant que le changement est stable par :
l'attente, au maximum, de la durée prescrite pour déterminer si le dispositif informatique existant revient dans le groupe de dispositifs informatiques ; et
la désignation du dispositif informatique existant comme ayant quitté le groupe si le dispositif informatique existant ne revient pas pendant la durée prescrite.

7. Dispositif informatique selon la revendication 1, dans lequel, dans le rôle de suiveur, le gestionnaire de compartiments répond à une détermination qu'un nouveau compartiment lui a été affecté par :
l'interaction avec le système S&N pour déterminer si le nouveau compartiment est actuellement détenu par un autre dispositif informatique ; et
lorsque le nouveau compartiment est détenu par un autre dispositif informatique, l'attente que le système S&N indique que l'autre dispositif informatique a renoncé à la propriété du nouveau compartiment avant de revendiquer la propriété du nouveau compartiment.

8. Dispositif informatique selon la revendication 1, dans lequel le service prescrit correspond :
au traitement d'une ou de plusieurs entrées de données associées à une ou plusieurs ressources Web respectives, afin de produire une ou plusieurs entrées de données traitées ; et
au téléchargement des entrées de données traitées vers un système d'indexation distribué,
un moteur de recherche utilisant le système d'indexation distribué pour faire correspondre des requêtes d'entrée à des ressources Web.

9. Dispositif informatique selon la revendication 3, dans lequel le premier ensemble de nœuds de données comporte également des données associées à celui-ci qui indiquent un ordre des nœuds de données dans le premier ensemble les uns par rapport aux autres.

10. Dispositif informatique selon la revendication 1, dans lequel le gestionnaire de compartiments interagit également avec une autre instance d'application qui réalise un autre service prescrit, cette autre instance d'application étant associée à un autre ensemble de paramètres d'initialisation.

11. Dispositif informatique selon la revendication 1, dans lequel un paramètre d'initialisation spécifie un nombre de compartiments que le dispositif informatique préfère détenir.

12. Procédé (1702, 1802) destiné à régir le fonctionnement d'un dispositif informatique (404, 1902) au sein d'un système distribué (404) de dispositifs informatiques (404, 406, 408), le système distribué (402) comprenant un système de stockage et de notification, S&N, (108), le système S&N (108) étant configuré pour stocker des nœuds de données dans une structure de données hiérarchique qui reflète l'état lié aux affectations du système distribué, et pour notifier les dispositifs informatiques des changements dans les nœuds de données, le dispositif informatique (404, 1902) comprenant :
l'initialisation (1704) d'un gestionnaire de compartiments (414) sur la base d'un ensemble de paramètres d'initialisation reçus à partir d'une instance d'application (410) installée sur le dispositif informatique (404, 1902), le gestionnaire de compartiments (414) correspondant à une ressource générale qui est reconfigurable par différents ensembles de paramètres d'initialisation pour fonctionner conjointement avec différentes instances d'application et étant configuré pour attribuer du travail aux dispositifs informatiques par unités de compartiments, d'une manière régie par l'ensemble de paramètres d'initialisation, chaque compartiment correspondant à une attribution de travail à réaliser par un dispositif informatique auquel il est affecté ;
l'utilisation du gestionnaire de compartiments (414) pour :
interagir (1706) avec le système S&N (108) pour déterminer si le dispositif informatique (404, 1902) doit se voir attribuer un rôle de dispositif informatique leader ;
et le gestionnaire de compartiments (414) étant en outre configuré pour :
lorsqu'il occupe un rôle de leader :
interagir (1710) avec le système S&N (108) pour déterminer s'il y a un changement dans l'appartenance à un groupe de dispositifs informatiques (404, 406, 408) inclus dans le système distribué (402) ;
lorsqu'il y a un changement dans l'appartenance, s'assurer (1712) que le changement est stable en attendant, au maximum, une durée prescrite, la durée prescrite étant spécifiée par l'ensemble de paramètres d'initialisation ;
lorsque le changement est déterminé comme étant stable, mettre à jour (1714) une affectation de compartiments aux dispositifs informatiques (404, 406, 408) dans le système distribué (402) de sorte qu'aucun couple de dispositifs informatiques ne se voie attribuer le même compartiment, chaque compartiment correspondant à une attribution de travail à réaliser,
l'affectation d'une tâche à un compartiment étant déterminée par la création d'un hachage de données associées à la tâche, et le mappage du hachage avec un identifiant de compartiment associé à un compartiment particulier ; et
interagir (1716) avec le système S&N (108) pour enregistrer l'affectation de compartiments ; et
lorsqu'il occupe un rôle de suiveur :
interagir (1802) avec le système S&N (108) pour déterminer s'il y a un changement de compartiments affectés au dispositif informatique (404, 1902) ;
lorsqu'il y a un changement de compartiments, notifier (1804) l'instance d'application (410) du changement de compartiments ; et
interagir (1806) avec le système S&N (108) pour revendiquer la propriété de tout compartiment nouvellement affecté et/ou pour renoncer à la propriété de tout compartiment nouvellement retiré.

13. Système distribué (402), comprenant :
plusieurs dispositifs informatiques (404, 406, 408) ;
un système de stockage et de notification, S&N (108), le système S&N (108) étant configuré pour stocker des nœuds de données dans une structure de données hiérarchique qui reflète l'état lié aux affectations du système distribué, et pour notifier les dispositifs informatiques des changements dans les nœuds de données ;
chaque dispositif informatique (404, 1902) comportant un gestionnaire de compartiments (414) et une instance d'application (410) ;
le gestionnaire de compartiments (414) de chaque dispositif informatique (404, 1902) étant configuré pour :
recevoir un ensemble de paramètres d'initialisation à partir de l'instance d'application (410) ;
attribuer du travail aux dispositifs informatiques par unités de compartiments, d'une manière régie par l'ensemble de paramètres d'initialisation, chaque compartiment correspondant à une attribution de travail à réaliser par un dispositif informatique auquel il est affecté ;
interagir avec le système S&N (108) pour déterminer si le dispositif informatique (404, 1902) doit se voir attribuer un rôle de dispositif informatique leader ;
et le gestionnaire de compartiments (414) étant en outre configuré pour :
lorsqu'il occupe un rôle de leader :
interagir avec le système S&N (108) pour déterminer s'il y a un changement dans l'appartenance des dispositifs informatiques (404, 406, 408) inclus dans le système distribué (402) ;
lorsque l'appartenance change, déterminer que le changement est stable en attendant jusqu'à une durée prescrite spécifiée par l'ensemble de paramètres d'initialisation ;
lorsque le changement est déterminé comme étant stable, mettre à jour une affectation de compartiments aux dispositifs informatiques (404, 406, 408) dans le système distribué (402) de sorte qu'aucun couple de dispositifs informatiques ne se voie attribuer le même compartiment, chaque compartiment correspondant à une attribution de travail à réaliser ; et
interagir avec le système S&N (108) pour enregistrer l'affectation de compartiments ; et
lorsqu'il occupe un rôle de suiveur :
interagir avec le système S&N (108) pour déterminer s'il y a un changement de compartiments affectés au dispositif informatique (404, 1902) ;
lorsqu'il y a un changement de compartiments, notifier l'instance d'application (410) du changement de compartiments ; et
interagir avec le système S&N (108) pour revendiquer la propriété de tout compartiment nouvellement affecté et/ou pour renoncer à la propriété de tout compartiment nouvellement retiré,
chaque dispositif informatique (402, 1902) comportant des circuits logiques matériels (1914), les circuits logiques matériels (1914) comportant : (a) un ou plusieurs processeurs matériels (1904) qui réalisent des opérations en exécutant des instructions lisibles par machine (1908) stockées dans une mémoire (1906), et/ou (b) une ou plusieurs autres unités logiques matérielles (1912) qui réalisent des opérations à l'aide d'un groupe de portes logiques spécifique à une tâche.

14. Système distribué selon la revendication 13, comportant en outre un composant d'acheminement de travail configuré pour :
envoyer une demande de tâche à un dispositif informatique particulier du système distribué ; et
lorsque le dispositif informatique particulier ne détient pas de compartiment associé à la demande de tâche, s'appuyer sur le dispositif informatique particulier pour acheminer la demande de tâche vers un autre dispositif informatique qui détient actuellement le compartiment.

15. Système distribué selon la revendication 13, comportant en outre un composant d'acheminement de travail configuré pour :
recevoir un hachage de données associées à une tâche ;
mapper le hachage avec un identifiant de compartiment associé à un compartiment particulier ; et
acheminer une demande de tâche vers un dispositif informatique actuellement associé au compartiment.
